# EUROPEAN PATENT APPLICATION

(11) **EP 4 554 051 A1**
(43) Date of publication of application: **14.05.2025**
(21) Application number: 24187816.4
(22) Date of filing: 10.07.2024
(51) Int. Cl.: H02K 1/14, H02K 3/52

(54) **ELECTRIC MOTOR**

(30) Priority: 11.07.2023 US 202363513042 P
(71) Applicant: Milwaukee Electric Tool Corporation, Brookfield, WI 53005 (US)
(72) Inventor: BOULANGER, Keith, Twin Lakes, 43181 (US); SCHULTZ, Megan, West Bend, 53095 (US); BAILEY, Matthew R., Racine, 53402 (US); EDWARDS, Jacob A., Milwaukee, 53203 (US); EMERSON, Linnea, Lisbon, 53089 (US)
(74) Representative: Forresters IP LLP

(57) **Abstract**

An electric motor may include a rotor assembly including a rotor shaft. An electric motor may include a stator assembly including a plurality of stator segments arranged adjacent one another in a circumferential direction of the stator assembly, at least one stator segment including a core having a core yoke portion and a core tooth portion, an insulator at least partially covering the core and having an insulator yoke portion and an insulator tooth portion, a stator segment yoke portion formed by the core yoke portion and the insulator yoke portion, a stator segment tooth portion formed by the core tooth portion and the insulator tooth portion, and a stator winding extending about the stator segment tooth portion including a wire lead. The insulator yoke portion includes a standoff portion that defines a wire notch. The wire notch at least partially receives the wire lead.

## Description

### CROSS-REFERENCE TO RELATED APPLICATIONS

This application claims priority to U.S. Provisional Patent Application No. 63/513,042, filed July 11, 2023, the entire contents of which are incorporated herein by reference.

### FIELD OF THE DISCLOSURE

The present disclosure relates to electric motors, and more specifically to stators for electric motors.

### BACKGROUND OF THE DISCLOSURE

A stator for an electric motor can be formed from a plurality of annular stator segments arranged into a tubular shape.

### SUMMARY OF THE DISCLOSURE

In some aspects, the techniques described herein relate to an electric motor including: a rotor assembly including a rotor shaft; a stator assembly including a plurality of stator segments arranged adjacent one another in a circumferential direction of the stator assembly, at least one stator segment including a core having a core yoke portion and a core tooth portion, an insulator at least partially covering the core and having an insulator yoke portion and an insulator tooth portion, a stator segment yoke portion formed by the core yoke portion and the insulator yoke portion, a stator segment tooth portion formed by the core tooth portion and the insulator tooth portion, and a stator winding extending about the stator segment tooth portion including a wire lead; and a bus bar assembly coupled to the stator assembly and configured to electrically connect to the stator winding, the bus bar assembly including a molded body and a plurality of conductors; wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion; wherein the standoff portion defines a wire notch recessed in the inner surface and extending in an axial direction of the electric motor; and wherein the wire notch at least partially receives the wire lead.

In some aspects, the techniques described herein relate to an electric motor including: a rotor assembly including a rotor shaft; and a stator assembly including a plurality of stator segments arranged adjacent one another in a circumferential direction of the stator assembly, at least one stator segment including a core having a core yoke portion and a core tooth portion, an insulator at least partially covering the core and having an insulator yoke portion and an insulator tooth portion, a stator segment yoke portion formed by the core yoke portion and the insulator yoke portion, a stator segment tooth portion formed by the core tooth portion and the insulator tooth portion, and a stator winding extending about the stator segment tooth portion and including a wire lead; wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion; wherein the standoff portion defines a first wire notch recessed in the top surface and extending in a radial direction of the electric motor from the inner surface to the outer surface; wherein the standoff portion further defines a second wire notch recessed in the inner surface and extending in an axial direction of the electric motor, the first wire notch communicating with the second wire notch; and wherein the first wire notch and the second wire notch each at least partially receive the wire lead.

In some aspects, the techniques described herein relate to a power tool including: a housing; and an electric motor received into the housing, the electric motor including a rotor assembly including a rotor shaft, a stator assembly including a plurality of stator segments arranged adjacent one another in a circumferential direction of the stator assembly, at least one stator segment including a core having a core yoke portion and a core tooth portion, an insulator at least partially covering the core and having an insulator yoke portion and an insulator tooth portion, a stator segment yoke portion formed by the core yoke portion and the insulator yoke portion, a stator segment tooth portion formed by the core tooth portion and the insulator tooth portion, and a stator winding extending about the stator segment tooth portion including a wire lead; wherein the electric motor further includes a bus bar assembly coupled to the stator assembly and configured to electrically connect to each stator winding, the bus bar assembly including a molded body and a plurality of conductors; wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion; wherein the standoff portion defines a wire notch recessed in the inner surface and extending in an axial direction of the electric motor; and wherein the wire notch at least partially receives the wire lead.

In some aspects, the techniques described herein relate to an electric motor including: a rotor assembly including a rotor shaft; a stator assembly including a core having a core yoke portion, a core tooth portion extending from the core yoke portion, and a core crown portion attached to the core tooth portion and located opposite from the core yoke portion, an insulator at least partially covering the core, the insulator having an insulator yoke portion at least partially covering the core yoke portion, an insulator tooth portion at least partially covering the core tooth portion, and an insulator crown portion at least partially covering the core crown portion, and a stator winding extending about the insulator tooth portion, the stator winding including a wire lead; and a bus bar assembly coupled to the stator assembly and configured to electrically connect to the stator winding, the bus bar assembly including a molded body and a plurality of conductors; wherein the insulator yoke portion includes a standoff portion that protrudes axially away from the core yoke portion, the standoff portion defining an inner surface facing toward the insulator crown portion, an outer surface facing away from the insulator crown portion, and a top surface facing away from the core yoke portion; wherein the standoff portion defines a wire notch recessed in the inner surface and extending in an axial direction of the electric motor; and wherein the wire notch at least partially receives the wire lead.

In some aspects, the techniques described herein relate to an electric motor including: a rotor assembly including a rotor shaft; and a stator assembly including a core having a core yoke portion, a core tooth portion extending from the core yoke portion, and a core crown portion attached to the core tooth portion and located opposite from the core yoke portion, an insulator at least partially covering the core, the insulator having an insulator yoke portion at least partially covering the core yoke portion, an insulator tooth portion at least partially covering the core tooth portion, and an insulator crown portion at least partially covering the core crown portion, and a stator winding extending about the insulator tooth portion, the stator winding including a wire lead; wherein the insulator yoke portion includes a standoff portion that protrudes axially away from the core yoke portion, the standoff portion defining an inner surface facing toward the insulator crown portion, an outer surface facing away from the insulator crown portion, and a top surface facing away from the core yoke portion; wherein the standoff portion defines a first wire notch recessed in the top surface and extending in a radial direction of the electric motor from the inner surface to the outer surface; wherein the standoff portion further defines a second wire notch recessed in the inner surface and extending in an axial direction of the electric motor; and wherein the first wire notch and the second wire notch each at least partially receive the wire lead.

Other features and aspects of the disclosure will become apparent by consideration of the following detailed description and accompanying drawings.

### BRIEF DESCRIPTION OF THE DRAWINGS

FIG. 1 is a perspective view of a power tool according to one embodiment.
FIG. 2 is a perspective view of an electric motor of the power tool of FIG. 1.
FIGS. 3 and 4 are exploded perspective views of the electric motor of FIG. 2.
FIG. 5 is a perspective view illustrating a stator assembly of the electric motor of FIG. 2.
FIG. 6 is a partially exploded perspective view illustrating the stator assembly of FIG. 5.
FIG. 7 is a partially exploded perspective view illustrating the stator assembly of FIG. 5 with portions removed.
FIGS. 8 and 9 are perspective views illustrating portions of the stator assembly of FIG. 5.
FIG. 10 is a perspective view illustrating a bus bar assembly of the electric motor of FIG. 2.
FIG. 11 is an exploded perspective view illustrating the bus bar assembly of FIG. 10.
FIG. 12 is a perspective cross-sectional view of the electric motor of FIG. 2, taken along lines 12-12 of FIG. 2.
FIG. 13 is a perspective view of a stator assembly according to another embodiment.
FIG. 14 is an exploded perspective view of the stator assembly of FIG. 13.
FIGS. 15 and 16 are perspective views of portions of the stator assembly of FIG. 13.
FIG. 17 is a perspective view of a stator assembly according to another embodiment.
FIG. 18 is a partially exploded perspective view illustrating the stator assembly of FIG. 17.
FIG. 19 is a perspective view of a stator assembly according to another embodiment.
FIG. 20 is a perspective view of a stator assembly according to another embodiment.
FIG. 21 is a perspective view of an electric motor according to another embodiment.
FIG. 22 is a cross-sectional view of the electric motor of FIG. 21, taken along line 22-22 of FIG. 21.
FIG. 23 is a side view of an electric motor according to another embodiment.
FIGS. 24 and 25 are partial perspective views of a stator assembly of the electric motor of FIG. 23.
FIG. 26 is a partial perspective view of a portion of the stator assembly of FIG. 24 according to another embodiment.
FIG. 27 is a partial perspective view of a portion of the stator assembly of FIG. 24 according to another embodiment.
FIG. 28 is a partial perspective view of a portion of the stator assembly of FIG. 24 according to another embodiment.
FIG. 29 is a perspective view of an electric motor according to another embodiment.
FIG. 30 is a top view of the electric motor of FIG. 29 with portions removed.
FIG. 31 is a partial perspective view of the electric motor of FIG. 29.
FIG. 32 is a perspective view of a molded insulator of a bus bar assembly of the electric motor of FIG. 29.
FIG. 33 is a perspective view of portions of an electric motor according to another embodiment.
FIG. 34 is a partially exploded perspective view of the electric motor of FIG. 33.
FIG. 35 is a side view illustrating a bus bar assembly of the electric motor of FIG. 33.
FIG. 36 is a plan view of the bus bar assembly of FIG. 35.
FIG. 37 is an exploded perspective view of the bus bar assembly of FIG. 35.
FIG. 38 is an exploded plan view of the bus bar assembly of FIG. 35 with portions removed.
FIG. 39 is a perspective view of portions of an electric motor according to another embodiment.
FIG. 40 is a partially exploded perspective view of the electric motor of FIG. 39.
FIG. 41 is a side view illustrating a bus bar assembly of the electric motor of FIG. 39.
FIG. 42 is a plan view of the bus bar assembly of FIG. 41.
FIG. 43 is an exploded perspective view of the bus bar assembly of FIG. 41.
FIG. 44 is an exploded plan view of the bus bar assembly of FIG. 41 with portions removed.
FIG. 45 is a perspective view of portions of an electric motor according to another embodiment.
FIG. 46 is a partially exploded perspective view of the electric motor of FIG. 45.
FIG. 47 is a side view illustrating a bus bar assembly of the electric motor of FIG. 45.
FIG. 48 is a plan view of the bus bar assembly of FIG. 47.
FIG. 49 is an exploded perspective view of the bus bar assembly of FIG. 47.
FIG. 50 is an exploded plan view of the bus bar assembly of FIG. 47 with portions removed.
FIG. 51 is a perspective view of portions of an electric motor according to another embodiment.
FIG. 52 is a partially exploded perspective view of the electric motor of FIG. 51.
FIG. 53 is a side view illustrating a bus bar assembly of the electric motor of FIG. 51.
FIG. 54 is a plan view of the bus bar assembly of FIG. 53.
FIG. 55 is an exploded perspective view of the bus bar assembly of FIG. 53.
FIG. 56 is an exploded plan view of the bus bar assembly of FIG. 53 with portions removed.
FIG. 57 is a perspective view of portions of an electric motor according to another embodiment.
FIG. 58 is a partially exploded perspective view of the electric motor of FIG. 57.
FIG. 59 is a side view illustrating a bus bar assembly of the electric motor of FIG. 57.
FIG. 60 is a plan view of the bus bar assembly of FIG. 59.
FIG. 61 is an exploded perspective view of the bus bar assembly of FIG. 59.
FIG. 62 is an exploded plan view of the bus bar assembly of FIG. 59 with portions removed.
FIG. 63 is a perspective view illustrating a bus bar assembly of the electric motor of FIG. 57 according to another embodiment.
FIG. 64 is a perspective view of portions of an electric motor according to another embodiment.
FIG. 65 is a partially exploded perspective view of the electric motor of FIG. 64.
FIG. 66 is a perspective view of a stator segment of the electric motor of FIG. 64.
FIG. 67 is a top view of the stator segment of FIG. 66 with portions removed.
FIG. 67A is a partial perspective view of the stator segment of the electric motor of FIG. 64.
FIG. 68 is a partial perspective view of the stator segment of FIG. 66.
FIG. 69 is a partial perspective view of the stator segment of FIG. 66 with portions removed.
FIG. 70 is a cross-sectional view of the stator segment of FIG. 66, taken along line 70-70 of FIG. 68.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

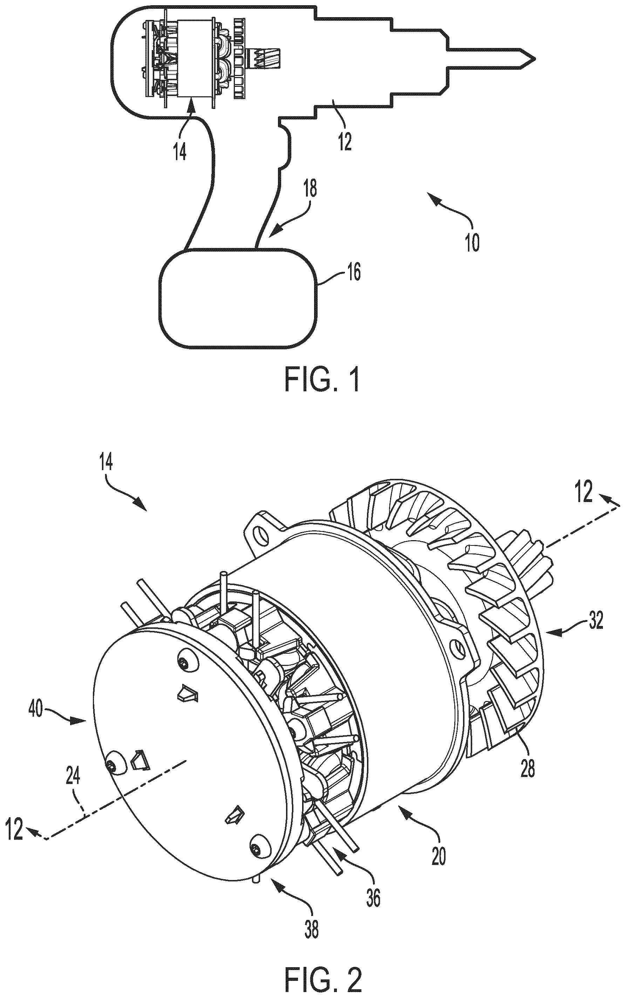

FIG. 1 and 2 illustrate a power tool 10 such as, e.g., a drill, a rotary impact tool, and the like. The power tool 10 includes a housing 12 and an electric motor 14. The power tool 10 is operable with a battery pack 16 removably coupled to a battery receptacle 18 located at a bottom end of the housing 12. The battery pack 16 includes a plurality of battery cells (not shown), which are electrically connected to provide the desired output (e.g., nominal voltage, current capacity, etc.) of the battery pack 16. The electric motor 14 receives power from the battery pack 16 when the battery pack 16 is coupled to the battery receptacle 18.

In some embodiments, the power tool 10 may include a power cord for electrically connecting the motor 14 to a source of AC power. The battery pack 16 is the preferred means for powering the power tool 10, however, because a cordless power tool can be used in locations where other power sources are unavailable.

With reference to FIGS. 2-4, the illustrated motor 14 is a brushless direct current ("BLDC") motor with a stator assembly 20 and a rotor assembly 22 that is rotatable with respect to the stator assembly 20 about an axis 24. The rotor assembly 22 includes a rotor body 26 and a fan 28 that are each supported on a rotor shaft 30. The fan 28 is located adjacent a first end or front end 32 of the motor 14. The stator assembly 20 includes a central cavity 34 that receives the rotor assembly 22 for rotation about the axis 24. The motor 14 also includes a bus bar assembly 36 and a printed circuit board assembly (PCBA) 38 that are each coupled to the stator assembly 20 at a second end or rear end 40 of the motor 14 opposite the front end 32.

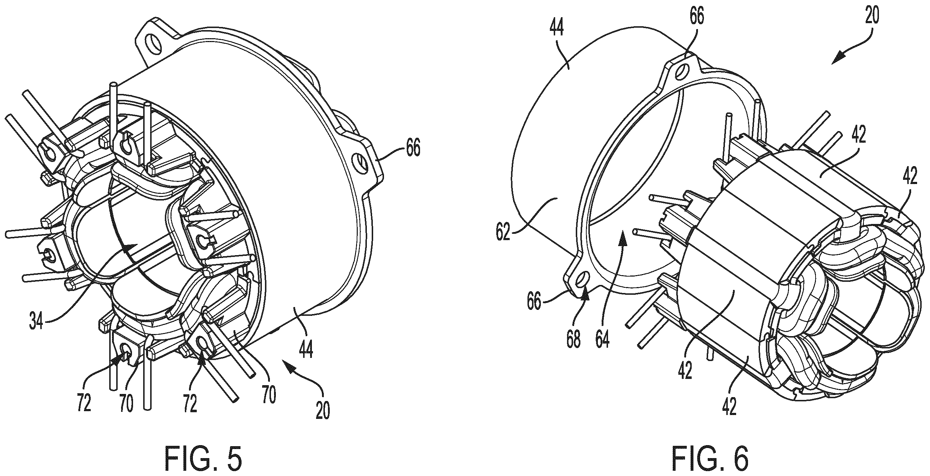

With reference to FIGS. 5-9, the stator assembly 20 is a segmented stator assembly 20 including, in the illustrated embodiment, six stator segments 42 arranged within a tubular housing 44. Each stator segment 42 includes a core 46, an overmolded insulator 48, and a stator winding 50. Adjacent stator segments 42 are interconnected to each other with a notch and protrusion interlock 52. Specifically, each stator segment 42 includes a longitudinally extending notch 54 provided in a first circumferential end face 56, and a longitudinally extending protrusion 58 protruding from a second circumferential end face 60. The notch 54 of one stator segment 42 receives the protrusion 58 of the adjacent stator segment 42 to align two adjacent stator segments 42.

The tubular housing 44 surrounds the arranged stator segments 42 to fix the stator segments 42 together. Specifically, the tubular housing 44 includes a tubular wall 62 that defines an inner cavity 64, and the stator segments 42 are received into the inner cavity 64 such that the tubular wall 62 converges about the stator segments 42. In one example, the tubular housing 44 can be heated to expand an outside diameter of the tubular wall 62, and then the tubular housing 44 can be pressed onto the stator segments 42. As the tubular housing 44 cools, the tubular wall 62 contracts about the stator segments 42 to secure the assembly. In the illustrated embodiment, the tubular housing 44 also includes mounting tabs 66 extending radially outward from the tubular wall 62, with each mounting tab 66 defining a mounting aperture 68 configured to receive a fastener (e.g., a screw) for securing the motor 14 to, e.g., a gearcase (not shown).

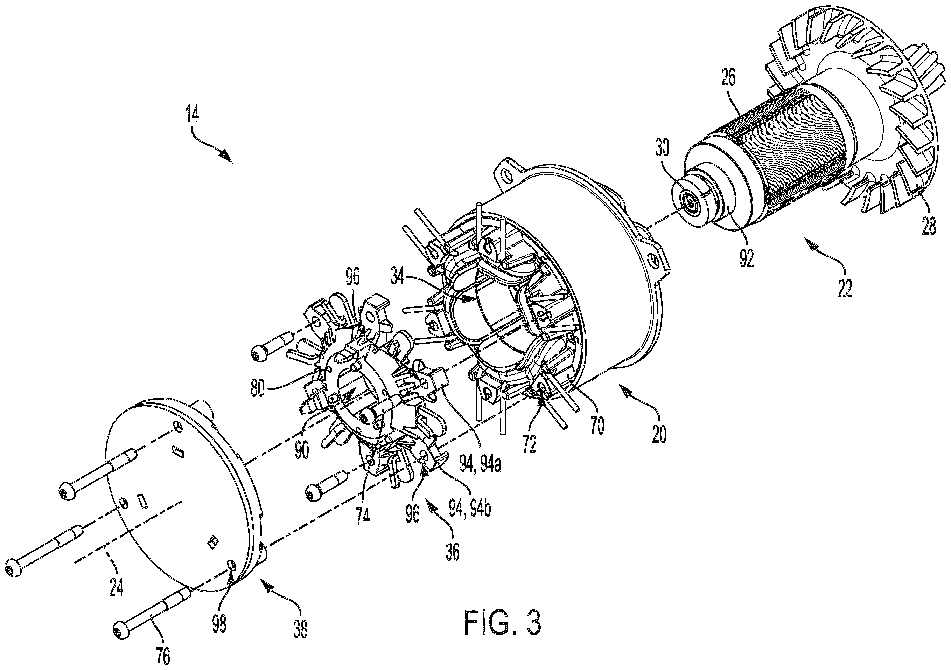

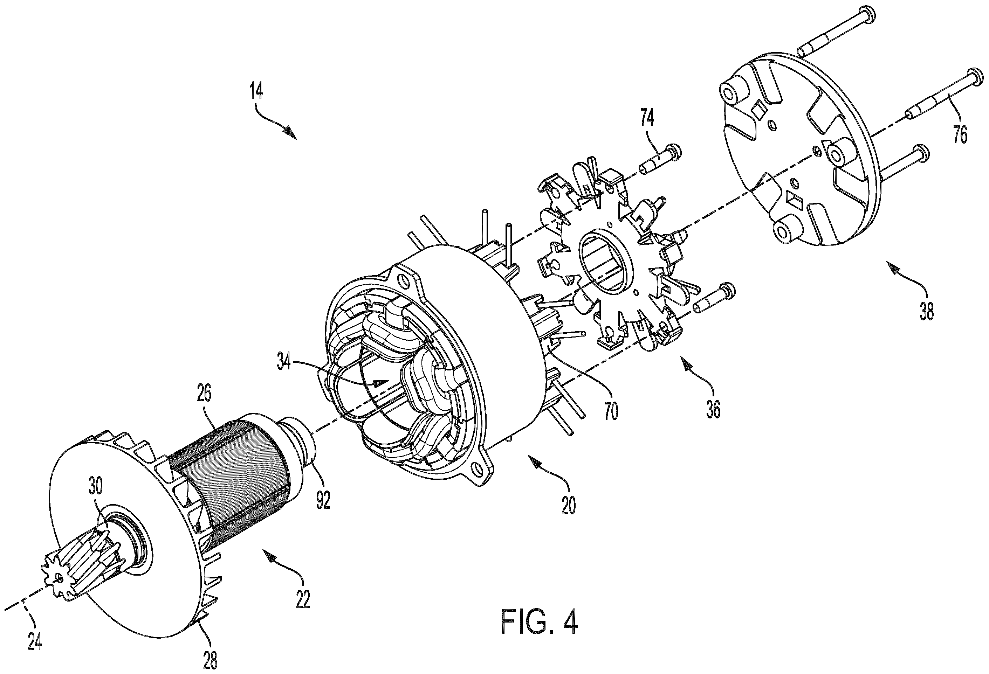

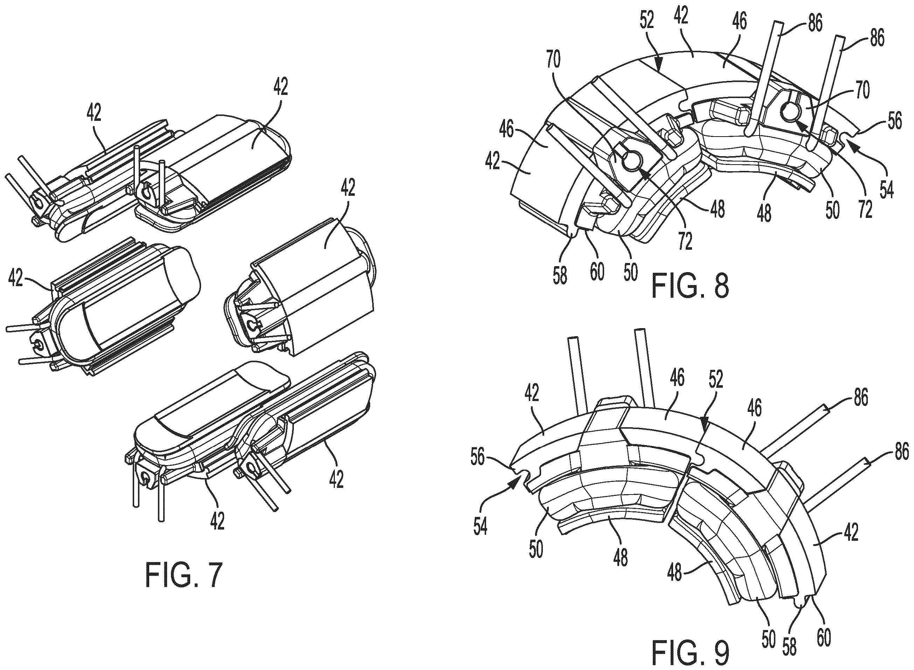

With reference to FIG. 8, each overmolded insulator 48 includes a mounting portion 70 protruding toward the rear end 40 of the motor 14. Each mounting portion 70 defines an axially extending threaded bore 72 that receives a first fastener 74 or a second fastener 76 to secure the bus bar assembly 36 and the PCBA 38 to the stator assembly 20 (FIGS. 3 and 4).

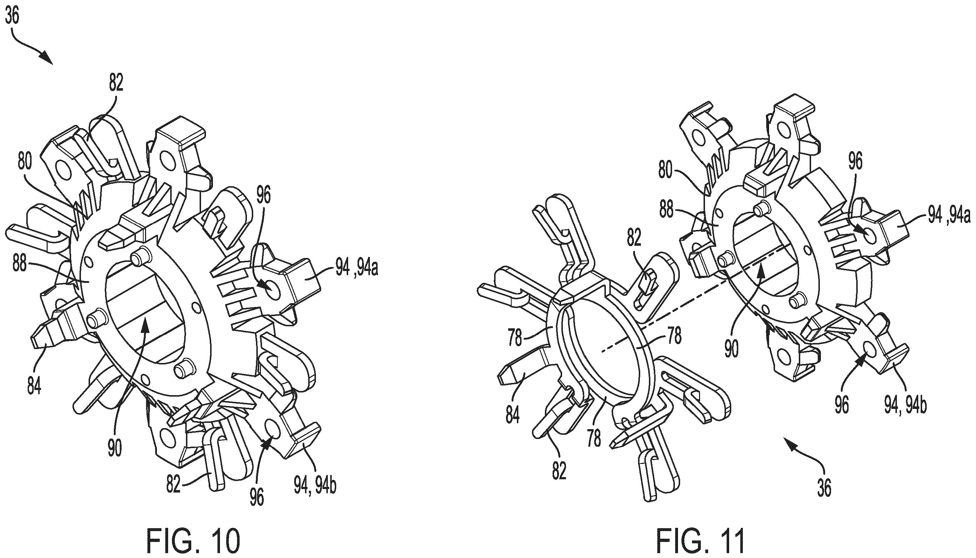

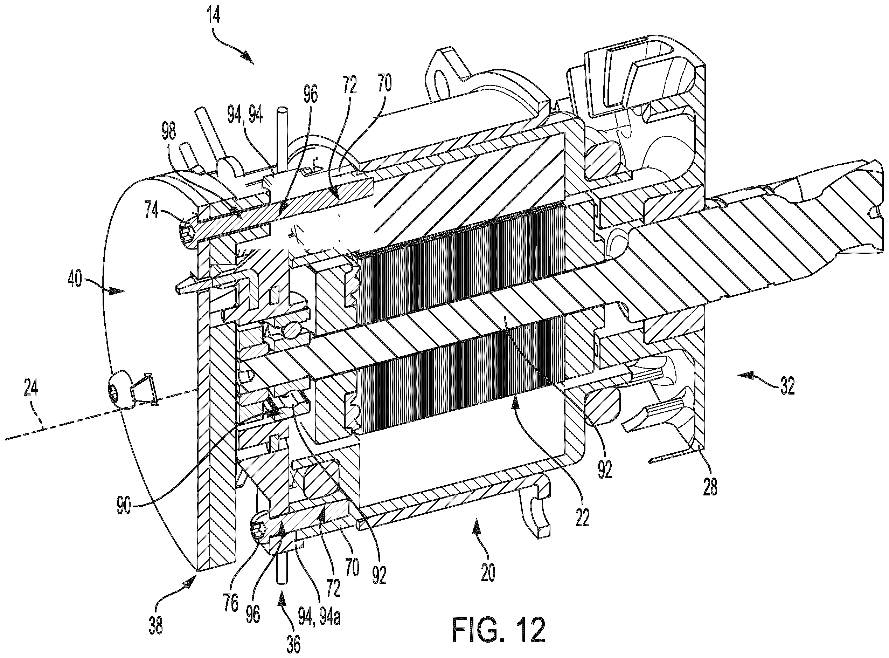

With reference to FIGS. 10 and 11, the bus bar assembly 36 includes three annular conductors 78 generally extending circumferentially about the motor 14, and an overmolded body 80 that fixedly supports the conductors 78. Each conductor 78 includes two tangs 82 provided at opposite ends of the conductor 78, and a terminal 84 extending in the axial direction of the motor 14. Each terminal 84 mechanically and electrically connects to the PCBA 38. Specifically, the PCBA 38 includes a plurality of apertures 85 (FIGS. 3 and 12) corresponding to the locations of the terminals 84. During assembly, the terminals 84 are inserted into the apertures 85 and soldered to the PCBA 38 to mechanically and electrically connect the terminals 84 to the PCBA 38. Each stator winding 50 includes a pair of leads 86 (FIG. 8) that connect to the adjacent tangs 82 of the conductors 78. The leads 86 can be soldered or fused to the tangs 82. In this way, the conductors 78 electrically connect the stator windings 50 to the PCBA 38. The PCBA 38 receives power from the battery pack 16 and selectively applies electrical current to the windings 50 to thereby cause the rotor shaft 30 to rotate about the axis 24.

The overmolded body 80 includes a central hub 88 that defines a central aperture or bearing pocket 90 that receives a rotor bearing 92 (FIGS. 10-12). The rotor bearing 92 receives the rotor shaft 30 to rotatably support the rotor assembly 22. The overmolded body 80 further includes radial arms 94 that extend radially outward from the central hub 88. In some embodiments, the number of radial arms 94 corresponds to the number of mounting portions 70 of the stator assembly 20. In the illustrated embodiment, the overmolded body includes six radial arms 94 that correspond to the six mounting portions 70 of the six stator segments 42. Each radial arm 94 defines a first aperture 96 that aligns with the threaded bore 72 of the corresponding mounting portion 70.

With reference to FIGS. 3 and 12, the bus bar assembly 36 is secured to the mounting portions 70 of the stator assembly 20 by the first fasteners 74 and the second fasteners 76, and the PCBA 38 is secured to the stator assembly 20 by the second fasteners 76. The PCBA 38 includes second apertures 98 extending through the PCBA 38 and corresponding to the first apertures 96 of every other radial arm 94 in the circumferential direction. Thus, the radial arms 94 include first radial arms 94a and second radial arms 94b. The first radial arms 94a are coupled directly to the mounting portions 70 by the first fasteners 74. The second radial arms 94b are coupled to both the mounting portions 70 and the PCBA 38 by the second fasteners 76. More specifically, the first fasteners 74 are received through the first apertures 96 of the first radial arms 94a and tighten into the threaded bores 72 to secure the first radial arms 94a to the mounting portions 70. The second fasteners 76 are received through the second apertures 98 of the PCBA 38 and through the first apertures 96 of the second radial arms 94b, and tighten into the threaded bores to secure both the PCBA 38 and the second radial arms 94 to the mounting portions 70. As such, the bus bar assembly 36 is secured to each mounting portion 70 of each stator segment 42, and supports the rotor bearing 92 to center the rotor assembly 22 with respect to the stator assembly 20.

With reference to FIGS. 3, 4, and 12, the PCBA 38 includes a printed circuit board (PCB) 95 and a heat sink 97 secured to the PCB 95. The heat sink 97 includes a plurality of recesses 97a, and the overmolded body 80 includes a plurality of axially extending protrusions 80a that are received within the corresponding recesses 97a to align the PCBA 38 with the bus bar assembly 36.

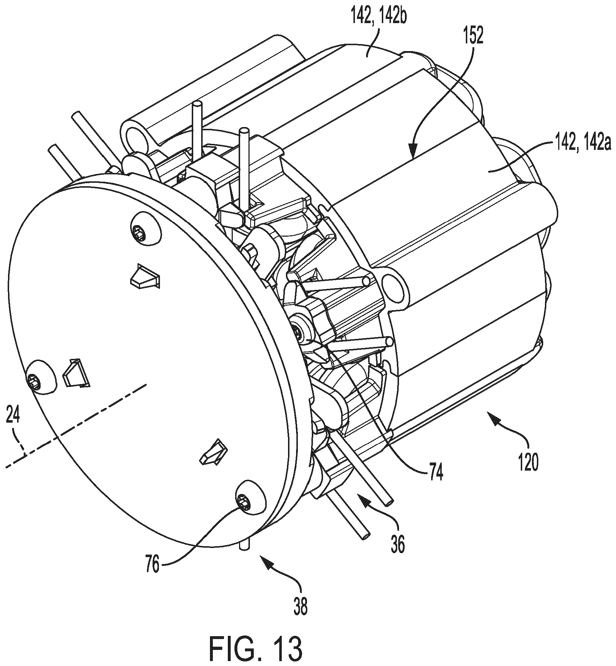

FIGS. 13-16 illustrate a stator assembly 120 according to another embodiment of the disclosure. The stator assembly 120 is similar to the stator assembly 20 described above and includes much of the same structure as the stator assembly 20. And, the stator assembly 120 is operable with each the rotor assembly 22, the bus bar assembly 36, and the PCBA 38 described above. Features and elements of the stator assembly 120 that are similar to the features and elements of the stator assembly 20 are assigned the same reference numerals "plus 100." It should be understood that the features of the stator assembly 120 that are not explicitly described below have the same properties as the features of the stator assembly 20.

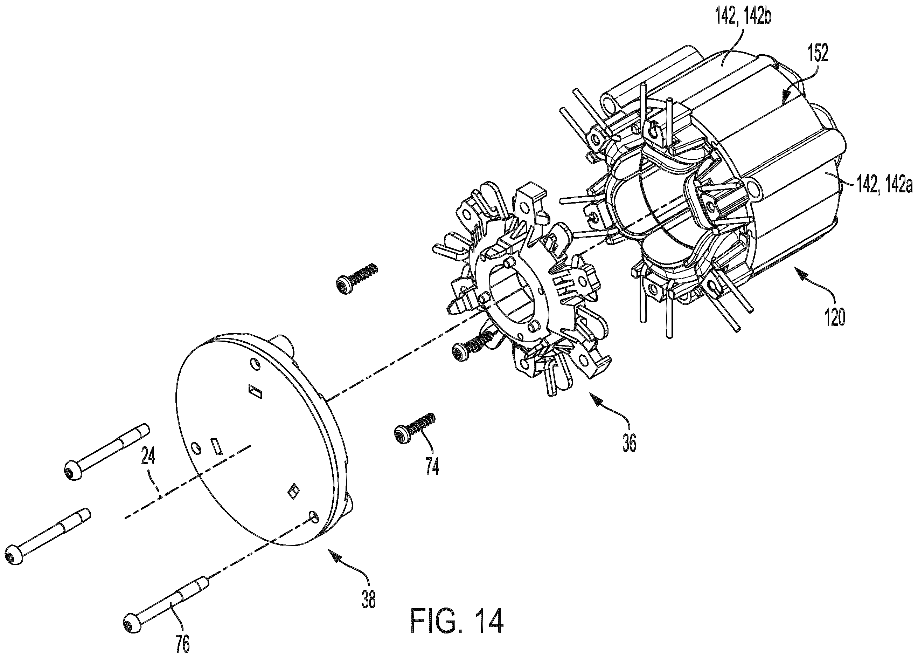

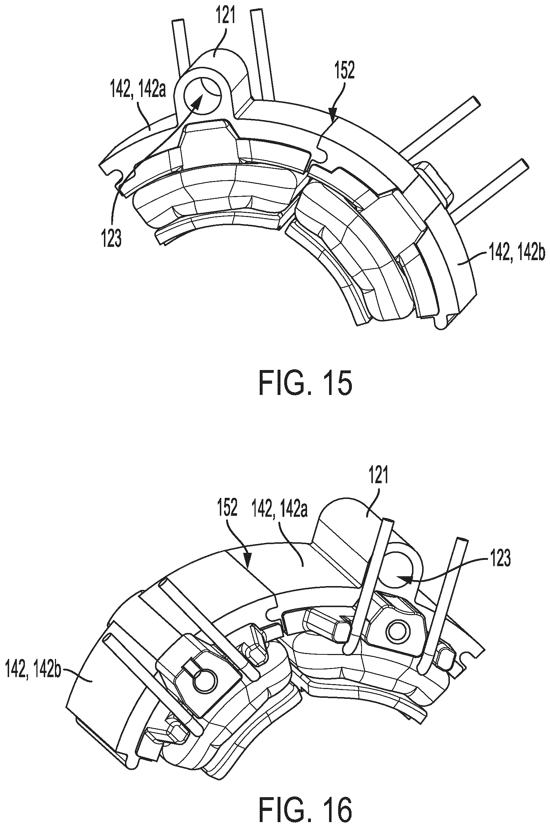

With reference to FIGS. 13 and 14, the stator assembly 120 couples to the bus bar assembly 36 and the PCBA 38 via the first fasteners 74 and the second fasteners 76 in the same manner as described above in connection with the stator assembly 20. And, the stator assembly 120 similarly includes stator segments 142 arranged end to end. However, the stator assembly 120 does not include a tubular housing. Instead, the stator segments 142 are laser welded at each notch and protrusion interlock 152 to secure the stator segments 142 together. Moreover, the stator segments 142 are not uniform, but instead include first stator segments 142a and second stator segments 142b arranged in an alternating order (FIGS. 15 and 16). More specifically, each first stator segment 142a is connected to a second stator segment 142b at each circumferential end. The first stator segments 142a each include a mounting rib 121 protruding radially outward and extending lengthwise in the axial direction. Each mounting rib 121 defines a mounting aperture 123 that receives a fastener for mounting the stator assembly 120 to, e.g., a gearcase (not shown). The second stator segments 142b do not include mounting ribs, but do include axially extending grooves that receive a portion of the overmolded insulator 148.

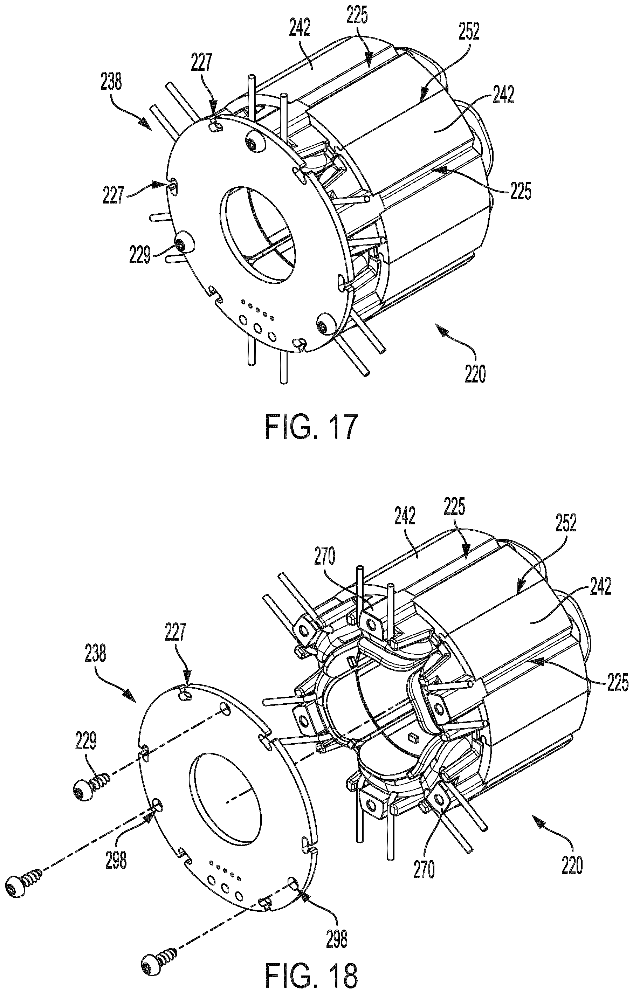

FIGS. 17 and 18 illustrate a stator assembly 220 according to another embodiment of the disclosure. The stator assembly 220 is similar to the stator assemblies 20, 120 described above and includes much of the same structure. And, the stator assembly 220 is operable with the rotor assembly 22 described above. Features and elements of the stator assembly 220 that are similar to the features and elements of the stator assemblies 20 and 120 are assigned the same reference numerals "plus 200." It should be understood that the features of the stator assembly 220 that are not explicitly described below have the same properties as the features of the stator assembly 20.

The stator assembly 220 includes stator segments 242 that are laser welded at each notch and protrusion interlock 252 to secure the stator segments 242 together. Each stator segment 242 includes an exterior groove 225 formed in a peripheral outer surface of a core 246 and extending lengthwise in an axial direction. The stator assembly 220 can be mounted within an interior of the housing 12. In this regard, the housing 12 can pe provided with longitudinal ribs (not shown) that project inward within the housing 12 and that can be received into the grooves 225 to fix the stator assembly 220 against rotation relative to the housing 12. In addition, the stator assembly 220 is operable with a PCBA 238 that includes peripheral notches 227 formed at intervals about a periphery of the PCBA 238. Each notch 227 can receive two adjacent leads 286 of the stator windings 250. The leads 286 can be soldered directly to solder pads provided within the notches 227 to directly electrically connect the leads 286 to the PCBA 238. Because the leads 286 are secured directly to the PCBA 238, no separate bus bar assembly need be provided. The PCBA 238 also includes second apertures 298 that receive fasteners 229 that tighten to at least some of the mounting portions 270 to secure the PCBA 238 to an axial end of the stator assembly 220.

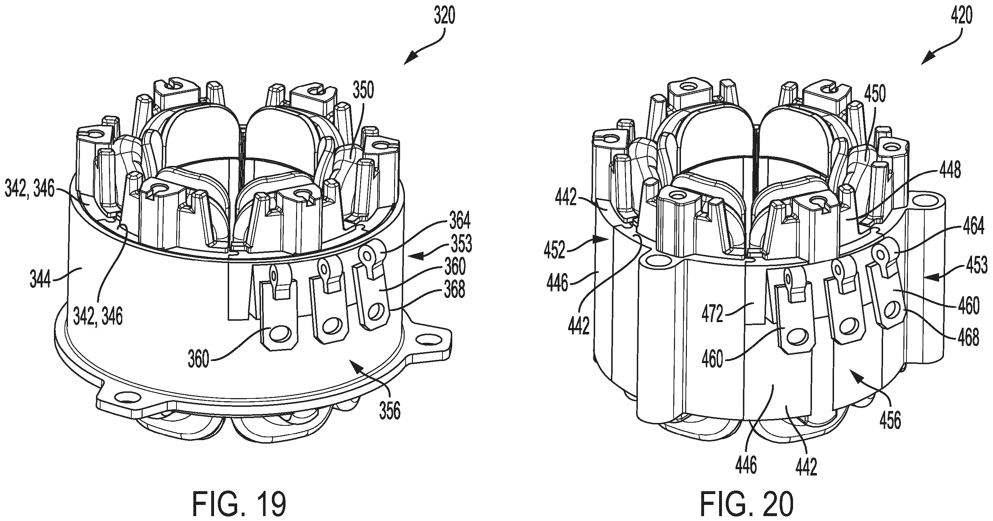

FIG. 19 illustrates a stator assembly 320 according to another embodiment of the disclosure. The stator assembly 320 is similar to the stator assembly 20 described above and includes much of the same structure. And, the stator assembly 320 is operable with the rotor assembly 22 described above. Features and elements of the stator assembly 320 that are similar to the features and elements of the stator assembly 20 are assigned the same reference numerals "plus 300." It should be understood that the features of the stator assembly 320 that are not explicitly described below have the same properties as the features of the stator assembly 20.

Like the segmented stator assembly 20 described above, the stator assembly 320 is a segmented stator assembly 320 including, in the illustrated embodiment, six stator segments 342 arranged within a tubular housing 344. But, unlike the stator assembly 20, the stator assembly 320 does not couple to a bus bar assembly at its axial end. Rather, the stator assembly 320 further includes a terminal block assembly 353 molded directly to an outer circumferential surface 356 of a tubular wall 362 of the tubular housing 344. The terminal block assembly 353 includes, in the illustrated embodiment, three conductors 360 generally extending longitudinally along the outer circumferential surface 356. Each conductor 360 includes a winding connection portion 364 provided proximate an axial end of the stator assembly 320 and a terminal 368 extending away from the winding connection portion 364 in the axial direction of the stator assembly 320. The winding connection portion 364 mechanically and electrically connects to leads of pairs of the windings 350, and each terminal 368 electrically connects to a PCBA (not shown). In this way, the conductors 360 electrically connect the stator windings 350 to the PCBA, which receives power from the battery pack 16 and selectively applies electrical current to the windings 350 to thereby cause the rotor shaft 30 to rotate about the axis 24. The conductors 360 can be supported on the outer circumferential surface 356 by a molded material (e.g., resin) that electrically insulates the conductors 360 from the tubular housing 344 and from the cores 346 of the stator segments 342.

FIG. 20 illustrates a stator assembly 420 according to another embodiment of the disclosure. The stator assembly 420 is similar to the stator assembly 120 described above and includes much of the same structure. And, the stator assembly 420 is operable with the rotor assembly 22 described above. Features and elements of the stator assembly 420 that are similar to the features and elements of the stator assembly 120 are assigned the same reference numerals "plus 300." It should be understood that the features of the stator assembly 420 that are not explicitly described below have the same properties as the features of the stator assembly 120.

Like the segmented stator assembly 120 described above, the stator assembly 420 is a segmented stator assembly 420 including, in the illustrated embodiment, six stator segments 442 that are laser welded at each notch and protrusion interlock 452 to secure the stator segments 442 together. But, unlike the stator assembly 120, the stator assembly 420 does not couple to a bus bar assembly at its axial end. Rather, the stator assembly 420 further includes a terminal block assembly 453 molded directly to an outer circumferential surface 456 of the core 446 of one of the stator segments 442. The terminal block assembly 453 includes, in the illustrated embodiment, three conductors 460 generally extending longitudinally along the outer circumferential surface 456. Each conductor 460 includes a winding connection portion 464 provided proximate an axial end of the stator assembly 420 and a terminal 468 extending away from the winding connection portion 464 in the axial direction of the stator assembly 420. The winding connection portion 464 mechanically and electrically connects to leads of pairs of the windings 450, and each terminal 468 electrically connects to a PCBA (not shown). In this way, the conductors 460 electrically connect the stator windings 450 to the PCBA, which receives power from the battery pack 16 and selectively applies electrical current to the windings 450 to thereby cause the rotor shaft 30 to rotate about the axis 24. The conductors 460 can be supported on the outer circumferential surface 456 by a molded material (e.g., resin) that electrically insulates the conductors 460 from the core 446 the stator segment 442. In some embodiments, the overmolded insulator 448 of the stator segment 442 can be formed with a terminal block portion 472 that supports the conductors 460.

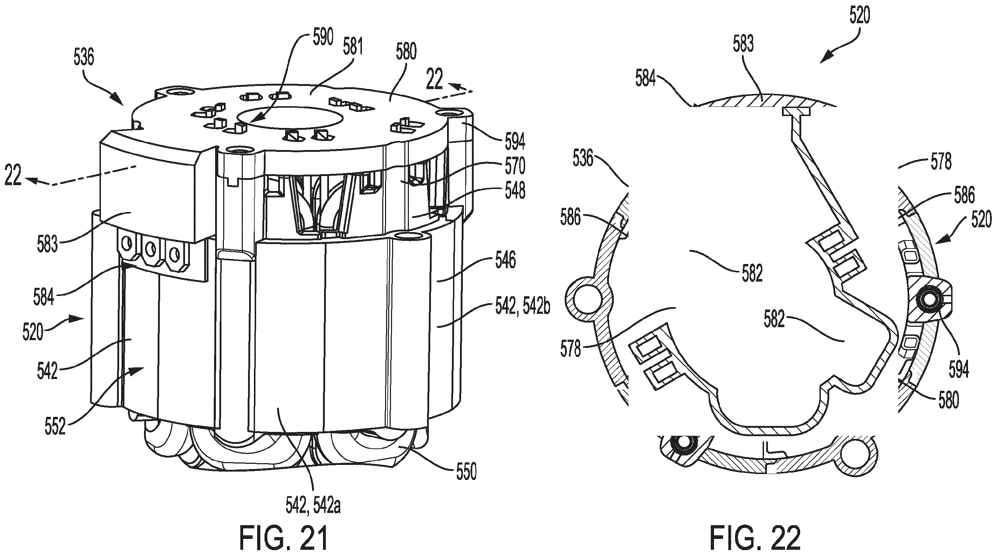

FIGS. 21 and 22 illustrate a segmented stator assembly 520 according to another embodiment of the disclosure. The stator assembly 520 is similar to the stator assembly 120 described above and includes much of the same structure. And, the stator assembly 520 is operable with the rotor assembly 22 described above. Features and elements of the stator assembly 520 that are similar to the features and elements of the stator assembly 120 are assigned the same reference numerals "plus 400." It should be understood that the features of the stator assembly 520 that are not explicitly described below have the same properties as the features of the stator assembly 120.

Like the segmented stator assembly 120 described above, the stator assembly 520 is a segmented stator assembly 520 including, in the illustrated embodiment, six stator segments 542 that are laser welded at each notch and protrusion interlock 552 to secure the stator segments 542 together. In alternative embodiments (not shown), the stator segments 542 may alternatively be arranged within a tubular housing such as the tubular housing 44 of the stator assembly 20 (FIG. 3) discussed above. Each stator segment 542 includes a core 546, an overmolded insulator 548, and a stator winding 550. The stator segments 542 are not uniform, but instead include first stator segments 542a and second stator segments 542b arranged in an alternating order. Each first stator segment 542a is connected to a second stator segment 542b at each circumferential end.

A bus bar assembly 536 couples to an axial end of the stator assembly 520. The bus bar assembly 536 includes three annular conductors 578 and an overmolded body 580 that fixedly supports the conductors 578. Each conductor 578 includes tangs 582 provided at one end of the conductor 578 and a terminal 584 formed at an opposite end of the conductor 578. The overmolded body 580 includes a disk portion 581 that supports the tangs 582 and a terminal block portion 583 extending axially away from the disk portion 581 at a circumferential edge of the disk portion 581. The terminal block portion 583 supports the terminals 584. The disk portion 581 also includes mounting tabs 594 that engage mounting portions 570 defined by the overmolded insulators 548 of the first stator segments 542a. The mounting tabs 594 can be secured to the mounting portions 570 via, e.g., threaded fasteners.

Each terminal 584 electrically connects to a PCBA (e.g., via wires; not shown) that receives power from the battery pack 16 (FIG. 1) and selectively applies electrical current to the stator windings 550. Each winding 550 includes a pair of leads 586 that connect to the adjacent tangs 582 of the conductors 578. In this way, the conductors 578 electrically connect the stator windings 550 to the PCBA 538.

The disk portion 581 of the overmolded body 580 defines a central aperture or bearing pocket 590 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 536 is secured to each mounting portion 570 of each stator segment 542a, and further supports the rotor bearing 592, the bus bar assembly 536 centers the rotor assembly 22 with respect to the stator assembly 520.

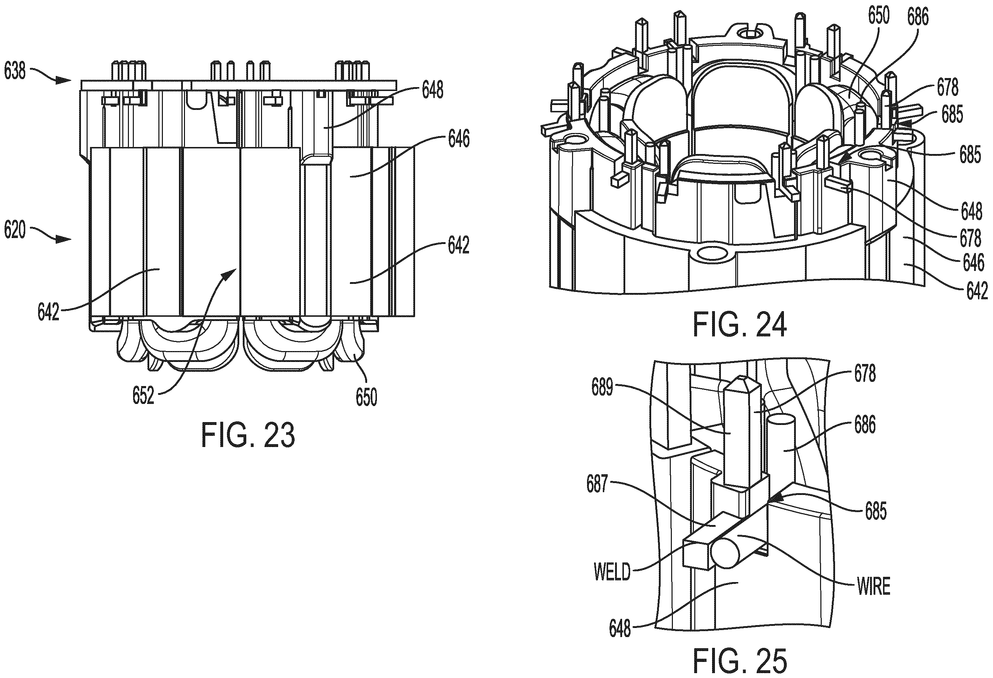

FIGS. 23-25 illustrate a stator assembly 620 according to another embodiment of the disclosure. The stator assembly 620 is similar to the stator assembly 120 described above and includes much of the same structure. And, the stator assembly 620 is operable with the rotor assembly 22 described above. Features and elements of the stator assembly 620 that are similar to the features and elements of the stator assembly 120 are assigned the same reference numerals "plus 500." It should be understood that the features of the stator assembly 620 that are not explicitly described below have the same properties as the features of the stator assembly 120.

Like the segmented stator assembly 120 described above, the stator assembly 620 is a segmented stator assembly 620 including, in the illustrated embodiment, six stator segments 642 that are laser welded to one another at notch and protrusion interlocks 652 to secure the stator segments 642 together. In alternative embodiments (not shown), the stator segments 642 may alternatively be arranged within a tubular housing such as the tubular housing 44 of the stator assembly 20 (FIG. 3) discussed above. Each stator segment 642 includes a core 646, an overmolded insulator 648, and a stator winding 650.

The stator assembly 620 is operable with a PCBA 638 that couples to an axial end of the stator assembly 620. The PCBA 638 receives power from the battery pack 16 (FIG. 1) and selectively applies electrical current to the stator windings 650. Each overmolded insulator 648 defines a pair of notches 685 at the axial end, and an L-shaped conductive terminal 678 is molded into the overmolded insulator 648 adjacent to each notch 685. A first leg 687 of the terminal 678 extends radially outward from the overmolded insulator 648, and a second leg 689 of the terminal 678 extends axially away from the overmolded insulator 648. Each lead 686 of each winding 650 is bent into a corresponding notch of the notches 685 and electrically connected to the corresponding first leg 687 of the terminal 678 (e.g., via laser welding). The second legs 689 of the terminals 678 are mechanically and electrically coupled to the PCBA 638 (e.g., via soldering). In some embodiments, the soldered connections between the PCBA 638 and the terminals 678 are sufficient to mechanically secure the PCBA 638 to the stator assembly 620.

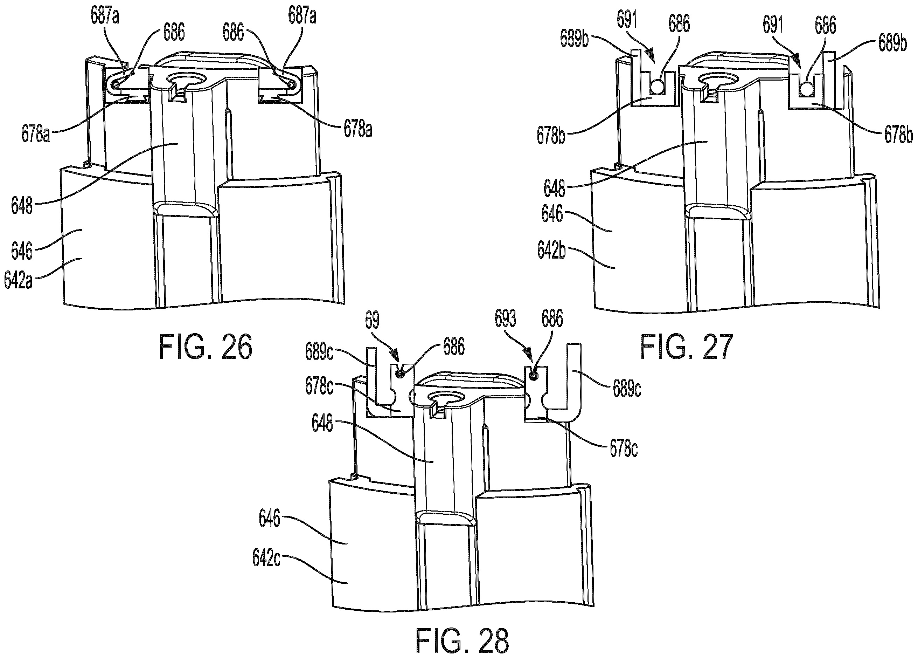

With reference to FIG. 26, in another embodiment, the stator assembly 620 can alternatively include stator segments 642a including molded-in conductive terminals 678a each having a perpendicular tang 687a instead of a radially extending first leg as described above. Each perpendicular tang 687a is folded over the corresponding lead 686 of the stator windings 650 and fused. A second leg (not shown) of the terminal 678a is soldered to the PCBA 638 (FIG. 23) in a manner similar to that described above.

With reference to FIG. 27, in another embodiment, the stator assembly 620 can alternatively include stator segments 642b including molded-in conductive terminals 678b that each define a stuff slot 691. The leads 686 of the stator windings 650 are pressed into the stuff slot 691 to form an electrical connection. A second leg 689b of the terminal 678b is soldered to the PCBA 638 (FIG. 23) in a manner similar to that described above.

With reference to FIG. 28, in another embodiment, the stator assembly 620 can alternatively include stator segments 642c including molded-in conductive terminals 678c each having a pinch weld slot 693. The leads 686 of the stator windings 650 are pressed into the pinch weld slot 693 and welded to form an electrical connection. A second leg 689c of the terminal 678c is soldered to the PCBA 638 (FIG. 23) in a manner similar to that described above.

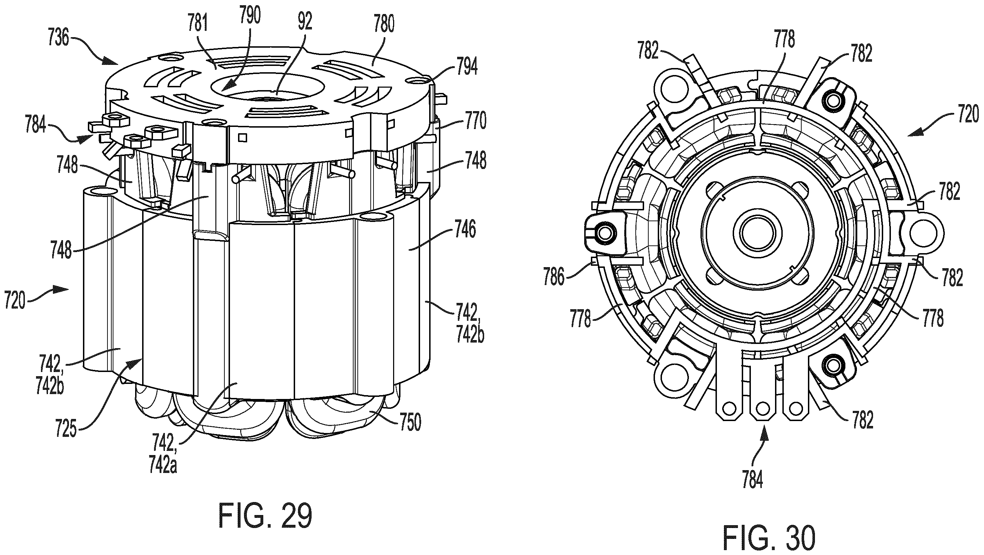

FIGS. 29-32 illustrate a segmented stator assembly 720 according to another embodiment of the disclosure. The stator assembly 720 is similar to the stator assembly 520 described above and includes much of the same structure. And, the stator assembly 720 is operable with the rotor assembly 22 described above. Features and elements of the stator assembly 720 that are similar to the features and elements of the stator assembly 520 are assigned the same reference numerals "plus 200." It should be understood that the features of the stator assembly 720 that are not explicitly described below have the same properties as the features of the stator assembly 520.

Like the segmented stator assembly 520 described above, the stator assembly 720 is a segmented stator assembly 720 including, in the illustrated embodiment, six stator segments 742 that are laser welded at each notch and protrusion interlock 752 to secure the stator segments 742 together. In alternative embodiments (not shown), the stator segments 742 may alternatively be arranged within a tubular housing such as the tubular housing 44 of the stator assembly 20 (FIG. 3) discussed above. Each stator segment 742 includes a core 746, an overmolded insulator 748, and a stator winding 750. The stator segments 742 are not uniform, but instead include first stator segments 742a and second stator segments 742b arranged in an alternating order. Each first stator segment 742a is connected to a second stator segment 742b at each circumferential end.

A bus bar assembly 736 couples to an axial end of the stator assembly 720. The bus bar assembly 736 includes three annular conductors 778 and an overmolded body 780 that fixedly supports the conductors 778. The overmolded body 780 is molded over the arranged conductors 778 such that a portion of each conductor 778 extends generally within the overmolded body 780.

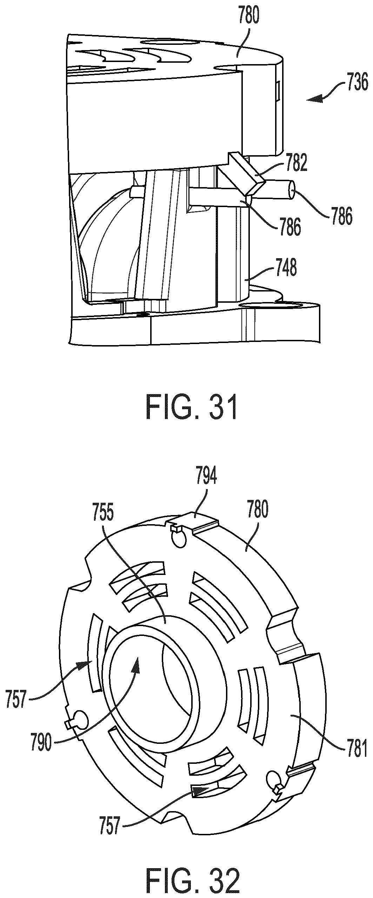

FIG. 30 illustrates the segmented stator assembly 720 with the overmolded body 780 removed to expose the annular conductors 778. Each conductor 778 includes two pairs of tangs 782 that each protrude radially outward, or radially and tangentially outward from the overmolded body 780. The two pairs of conductors 778 are provided at circumferentially opposite sides of the annular conductor 778. Each tang 782 connects to a lead 786 (FIG. 31) of the adjacent stator winding 750.

With reference to FIG. 31, each overmolded insulator 748 defines a pair of notches 785 at the axial end. Each notch 785 is located adjacent a corresponding tang 782. Each lead 786 of each winding 750 is bent into a corresponding notch of the notches 785 and electrically connected to the corresponding tang 782 (e.g., via laser welding). Likewise, each tang 782 is bent toward the notch 785 (i.e., toward the axial direction) to bring the tang 782 into contact with the lead 786.

Each conductor 778 also includes a terminal 784 protruding radially outward, or at least radially and tangentially outward from the overmolded body 780. Each terminal 784 electrically connects to a PCBA (e.g., via wires; not shown) that receives power from the battery pack 16 (FIG. 1) and selectively applies electrical current to the stator windings 750. In this way, the conductors 578 electrically connect the stator windings 550 to the PCBA 538.

With reference to FIGS. 29 and 32, the overmolded body 780 includes a generally disk-shaped disk portion 781 mounting tabs 794 that protrude radially outward from the disk portion 781. The mounting tabs 794 engage mounting portions 770 defined by the overmolded insulators 748 of the first stator segments 742a. The mounting tabs 794 can be secured to the mounting portions 770 via, e.g., threaded fasteners.

The overmolded body 780 includes a central annular wall 755 that extends axially away from the disk portion 781 and toward the rotor assembly 22 (FIG. 3). The annular wall 755 and the disk portion 781 together define a central aperture or bearing pocket 790 that receives the rotor bearing 92 (FIG. 29). The rotor bearing 92 receives the rotor shaft 30 (FIG. 3) of the rotor assembly 22 to rotatably support the rotor assembly 22. Since the bus bar assembly 736 is secured to each mounting portion 770 of each stator segment 742a, and further supports the rotor bearing 792, the bus bar assembly 736 centers the rotor assembly 22 with respect to the stator assembly 720. The disk portion 781 also includes a plurality of vent apertures 757 surrounding the bearing pocket 790 (FIG. 32). The vent apertures 757 permit cooling airflow generated by the fan 28 (FIG. 3) to pass through the bus bar assembly 736.

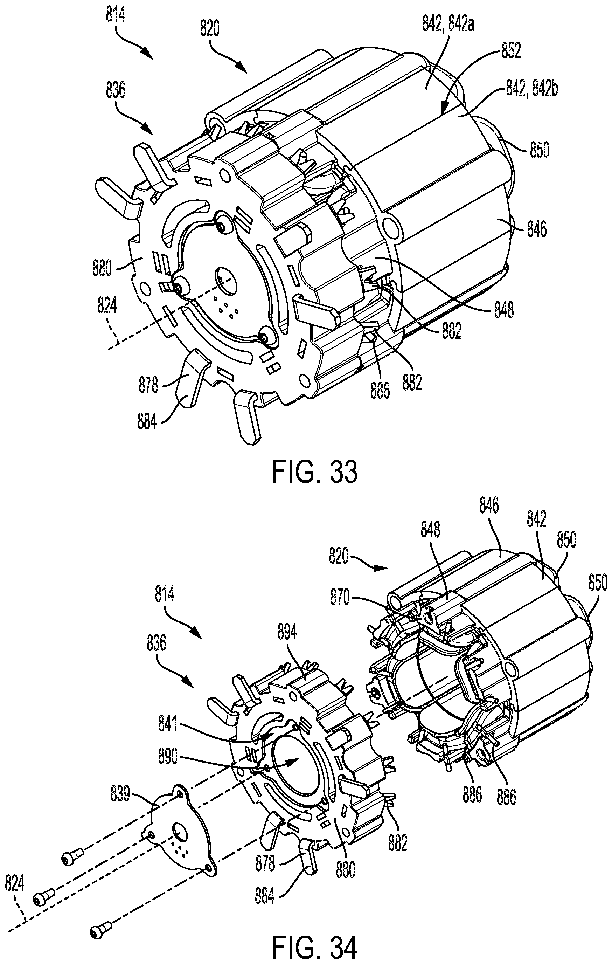

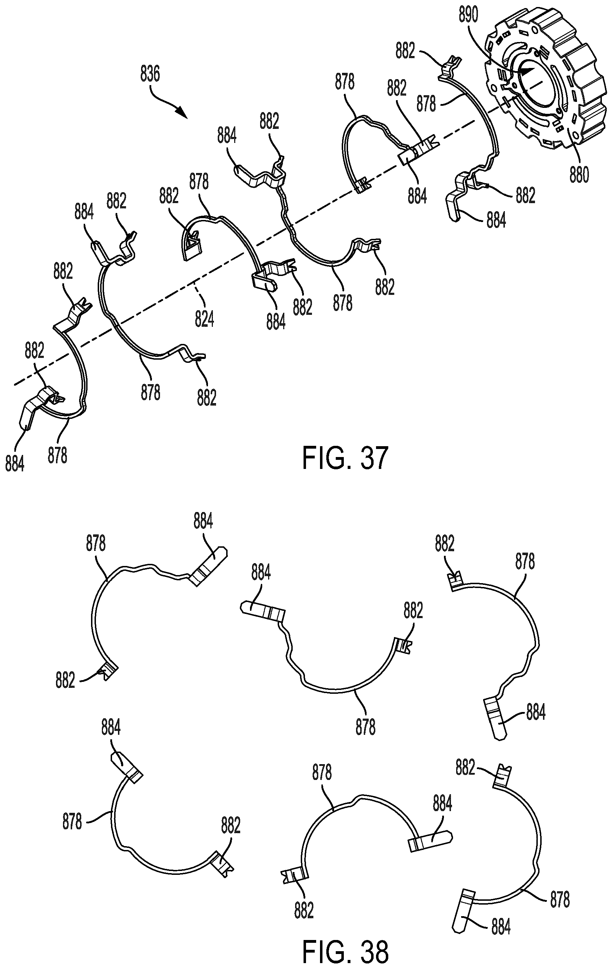

FIGS. 33-38 illustrate portions of an electric motor 814 according to another embodiment of the disclosure. The motor 814 includes a segmented stator assembly 820 that is similar to the stator assembly 120 described above and includes much of the same structure. And, the stator assembly 820 is operable with the rotor assembly 22 described above. Features and elements of the stator assembly 820 that are similar to the features and elements of the stator assembly 120 are assigned the same reference numerals "plus 700." It should be understood that the features of the stator assembly 820 that are not explicitly described below have the same properties as the features of the stator assembly 120.

Like the segmented stator assembly 120 described above, the stator assembly 820 is a segmented stator assembly 820 including, in the illustrated embodiment, six stator segments 842 that are laser welded at each notch and protrusion interlock 852 to secure the stator segments 842 together. In alternative embodiments (not shown), the stator segments 842 may alternatively be arranged within a tubular housing such as the tubular housing 44 of the stator assembly 20 (FIG. 3) discussed above. Each stator segment 842 includes a core 846, an overmolded insulator 848, and a stator winding 850. The stator segments 842 are not uniform, but instead include first stator segments 842a and second stator segments 842b arranged in an alternating order. Each first stator segment 842a is connected to a second stator segment 842b at each circumferential end.

The motor 814 includes a bus bar assembly 836 that couples to an axial end of the stator assembly 820. The bus bar assembly 836 includes six annular conductors 878 and an overmolded body 880 that fixedly supports the conductors 878. Each conductor 878 includes two tangs 882 provided at two opposite ends of the conductor 878 and a terminal 884 formed at one of the ends of the conductor 878 and located adjacent one of the two tangs 882. The overmolded body 880 includes mounting tabs 894 that engage mounting portions 870 defined by the overmolded insulators 848 of the first stator segments 842a. The mounting tabs 894 can be secured to the mounting portions 870 via, e.g., threaded fasteners.

Each terminal 884 electrically connects to a PCBA (e.g., via wires; not shown) that receives power from the battery pack 16 (FIG. 1) and selectively applies electrical current to the stator windings 850. Each winding 850 includes a pair of leads 886 that connect to the two adjacent tangs 882 of the conductors 878. In this way, the conductors 878 electrically connect the stator windings 850 to the PCBA.

The overmolded body 880 defines a central aperture or bearing pocket 890 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 836 is secured to each mounting portion 870 of each stator segment 842a, and further supports the rotor bearing 92, the bus bar assembly 836 centers the rotor assembly 22 with respect to the stator assembly 820.

A PCBA 839, such as a rotor position sensor circuit board, is coupled to the overmolded body 880 of the bus bar assembly 836. The PCBA 839 is generally annular in shape and received into a corresponding centrally located, annularly shaped recess 841 defined in the overmolded body 880 and secured thereto by threaded fasteners. The PCBA 839 covers at least a portion of the bearing pocket 890.

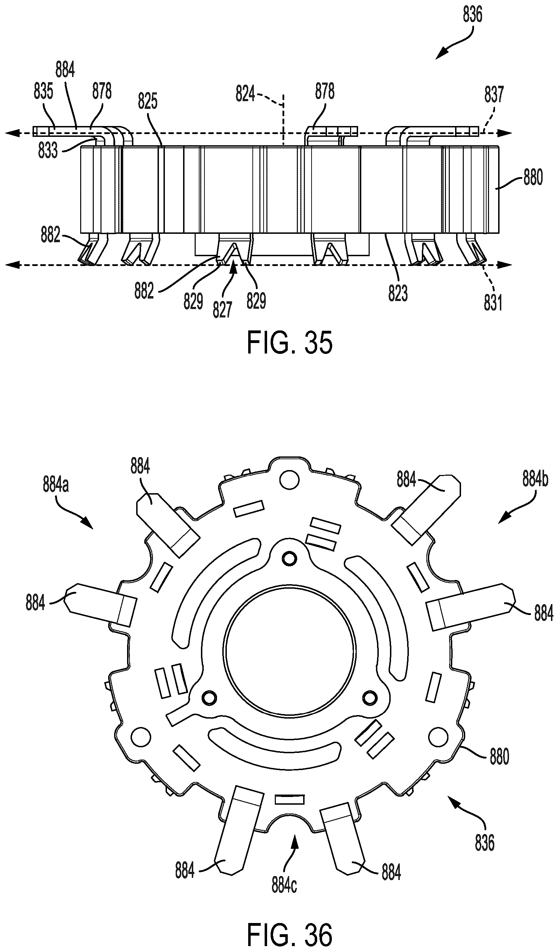

With reference to FIGS. 35 and 36, the bus bar assembly 836 includes, in sum, twelve tangs 882 that are equally spaced circumferentially about a periphery of the overmolded body 880. In other embodiments (not shown), fewer or more tangs are also contemplated, and the number of tangs may be twice the number of stator windings such that each tang connects to a corresponding lead of the stator windings. In the illustrated embodiment, the bus bar assembly 836 also includes six terminals 884 provided in three pairs 884a-884c (i.e., three groups 884a-884c of two terminals 884). The three pairs 884a-884c are circumferentially spaced apart from one another about the periphery of the overmolded body 880. In the illustrated embodiment, each group 884a-884c is spaced apart from the other groups 884a-884c by approximately 120 degrees, measured about a central axis 824 of the motor 814.

As shown in FIG. 35, the overmolded body 880 includes a first axial surface 823 extending at a first axial end thereof and a second axial surface 825 extending at a second axial end thereof. The first axial surface 823 faces toward the stator assembly 820 and the second axial surface 825 faces away from the stator assembly 820. The tangs 882 each protrude from the first axial surface 823 and extend partially in the axial direction and partially in the radial direction. That is, each tang 882 extends generally toward the stator assembly 820 and also outward in the radial direction. Each tang 882 also includes a V-shaped notch 827 defined in a distal end thereof between two adjacent prongs 829. The corresponding lead 886 (FIG. 33) of the adjacent stator winding 850 is received into the notch 827 and mechanically attached to the tang 882 between the prongs 829 by, e.g., laser welding. As further shown in FIG. 35, each of the tangs 882 are also generally located within the same axial region of the motor 814. In particular, the tips of each of the prongs 829 of each tang 882 together define a first plane 831 that extends perpendicular to the central axis 824.

Each terminal 884 protrudes from the second axial surface 825 of the overmolded body 880 and is generally L-shaped with a first leg 833 extending in the axial direction and a second leg 835 extending in the radial direction. The second legs 835 of each terminal 884 are all generally located within the same axial region of the motor 814. In particular, the second legs 835 of each of the terminals 884 together define a second plane 837 that extends perpendicular to the central axis 824 and parallel to the first plane 831.

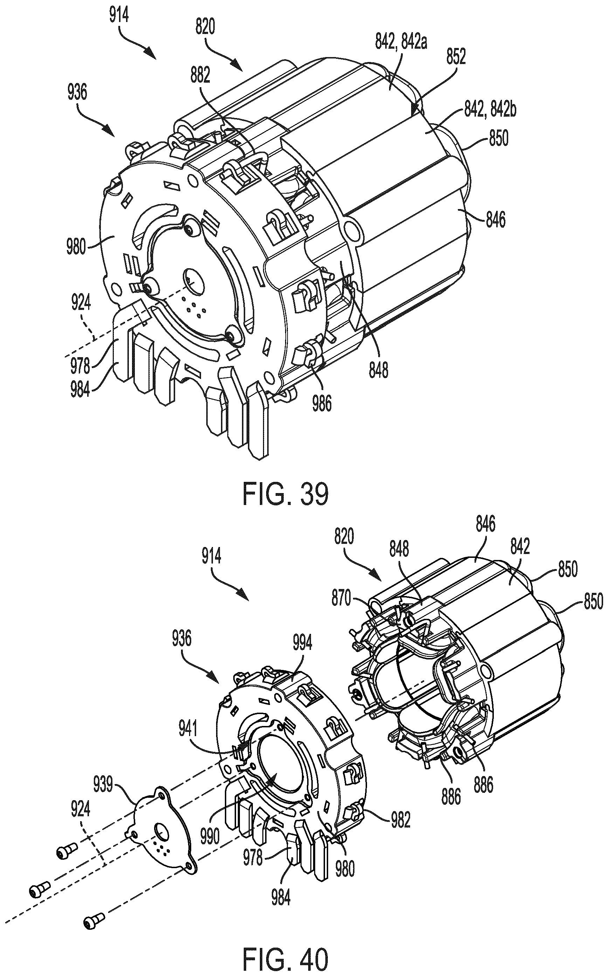

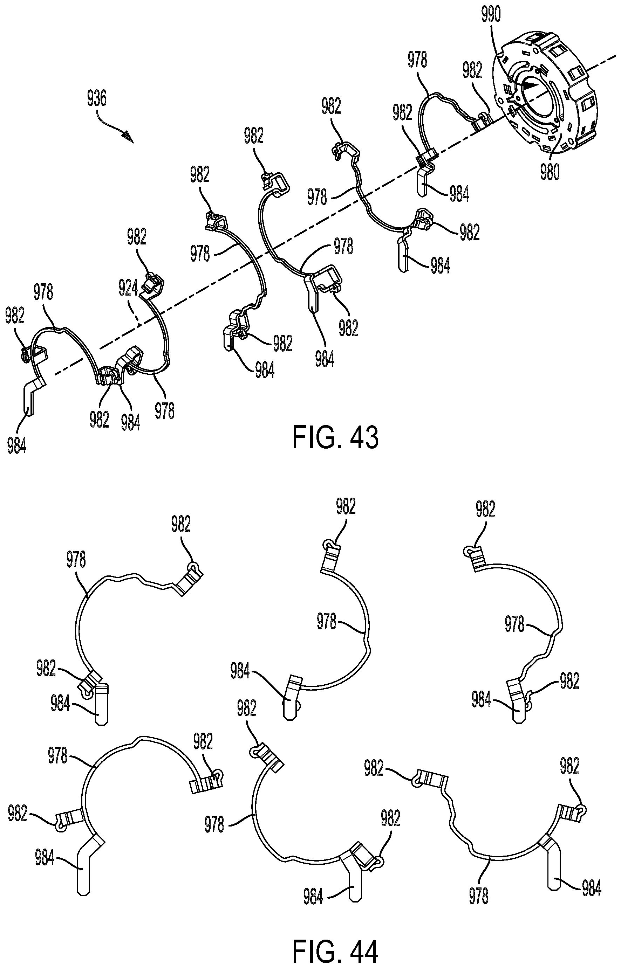

FIGS. 39-44 illustrate portions of an electric motor 914 according to another embodiment of the disclosure. The motor 914 includes the segmented stator assembly 820 described herein in connection with FIGS. 33-38, and is operable with the rotor assembly 22 described herein in connection with FIGS. 2-4 and 12.

The motor 914 includes a bus bar assembly 936 that couples to an axial end of the stator assembly 920. The bus bar assembly 936 includes six annular conductors 978 and an overmolded body 980 that fixedly supports the conductors 978. Each conductor 978 includes two tangs 982 provided at two opposite ends of the conductor 978 and a terminal 984 formed at one of the ends of the conductor 978 and located adjacent one of the two tangs 982. The overmolded body 980 includes mounting tabs 994 that engage mounting portions 870 defined by the overmolded insulators 848 of the first stator segments 842a. The mounting tabs 994 can be secured to the mounting portions 870 via, e.g., threaded fasteners.

Each terminal 984 electrically connects to a PCBA (e.g., via wires; not shown) that receives power from the battery pack 16 (FIG. 1) and selectively applies electrical current to the stator windings 850. The leads 886 of the windings 850 connect to the two adjacent tangs 982 of the conductors 978. In this way, the conductors 978 electrically connect the stator windings 850 to the PCBA.

The overmolded body 980 defines a central aperture or bearing pocket 990 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 936 is secured to each mounting portion 870 of each stator segment 842a, and further supports the rotor bearing 92, the bus bar assembly 936 centers the rotor assembly 22 with respect to the stator assembly 820.

A PCBA 939, such as a rotor position sensor circuit board, is coupled to the overmolded body 980 of the bus bar assembly 936. The PCBA 939 is generally annular in shape and received into a corresponding centrally located, annularly shaped recess 941 defined in the overmolded body 980 and secured thereto by threaded fasteners. The PCBA 939 covers at least a portion of the bearing pocket 990.

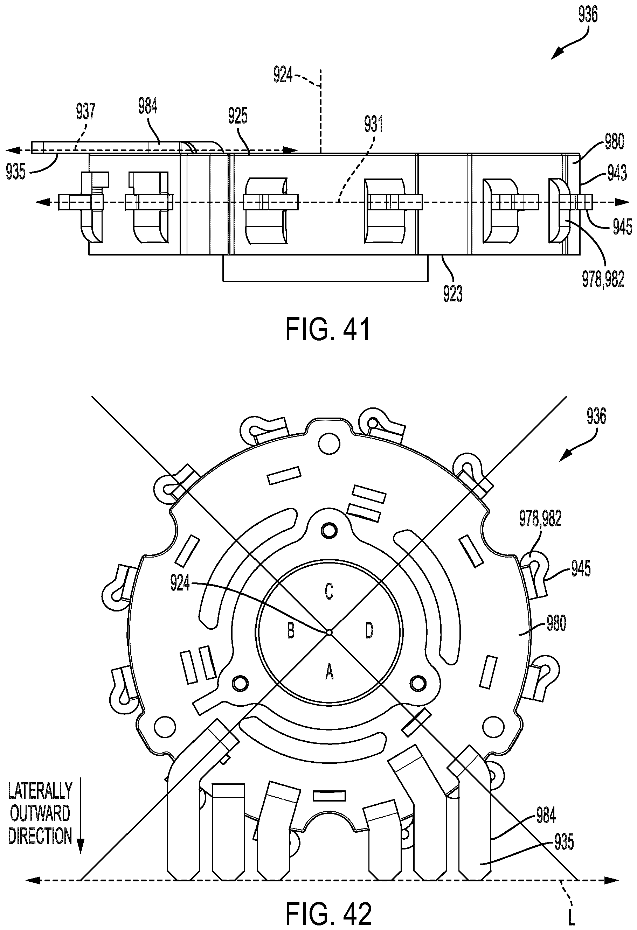

As shown in FIG. 41, the overmolded body 980 includes a first axial surface 923 extending at a first axial end thereof and a second axial surface 925 extending at a second axial end thereof. The first axial surface 923 faces toward the stator assembly 820 and the second axial surface 925 faces away from the stator assembly 820. The overmolded body 980 also includes a circumferential outer surface 943 that extends between the first and second axial surfaces 923, 925. The tangs 982 each protrude from the circumferential outer surface 943 generally in the radial direction. Each tang 982 includes a hook portion 945 that extends generally in the circumferential direction. The corresponding lead 886 (FIG. 33) of the adjacent stator winding 850 is received by and contacts the hook portion 945 and is mechanically attached thereto by, e.g., laser welding. In other embodiments, the leads 886 can be attached to the hook portions 945 by other means, such as soldering, ultrasonic welding, crimping, and the like. As further shown in FIG. 41, each of the tangs 982 are also generally located within the same axial region of the motor 814. In particular, each of the hook portions 945 of each tang 982 together define a first plane 931 that extends perpendicular to the central axis 924.

In the illustrated embodiment, the bus bar assembly 936 includes six terminals 984 that are gathered to one lateral side of the overmolded body 980. Each terminal 984 protrudes from the second axial surface 925 of the overmolded body 980 and includes a leg portion 935 that extends in a laterally outward direction that is perpendicular to the central axis 924. Each of the leg portions 935 extend generally parallel to one another. The longitudinal extents of each leg portion 935 together define a second plane 937 that extends perpendicular to the central axis 924 and parallel to the first plane 931. In addition, distal tips 947 of each leg portion 935 are laterally aligned with each other. In particular, the distal tips 947 terminate along a straight line L that extends perpendicular to the central axis 924 and perpendicular to the laterally outward direction. Moreover, as shown in FIG. 42, the bus bar assembly 936 may be divided into four equal radial quadrants A-D that each originate from the central axis 924. The leg portions 935 of each terminal 984 are located within a single quadrant A.

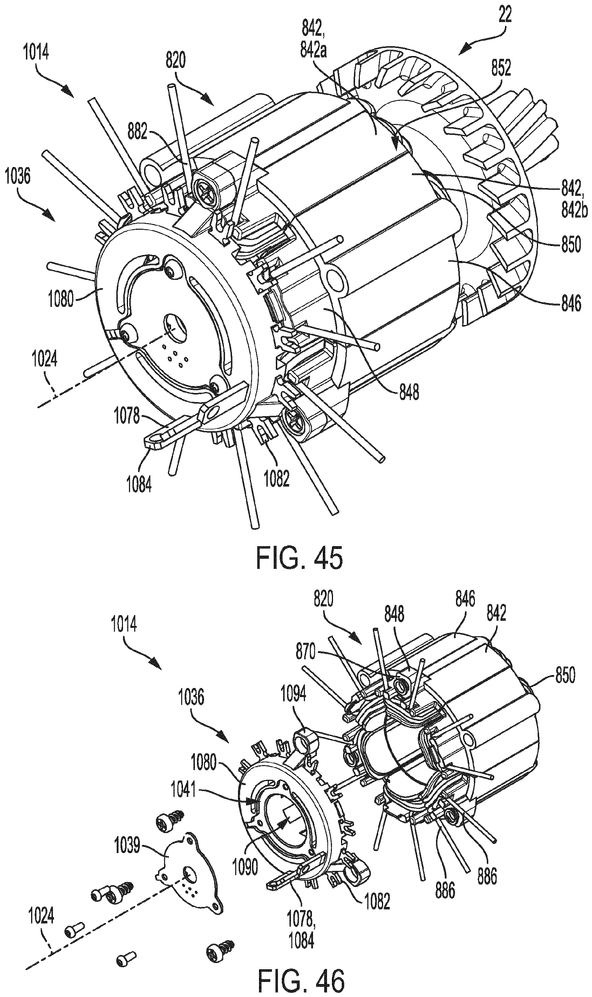

FIGS. 45-50 illustrate all or portions of an electric motor 1014 according to another embodiment of the disclosure. The motor 1014 includes the segmented stator assembly 820 described herein in connection with FIGS. 33-38, and is operable with the rotor assembly 22 described herein in connection with FIGS. 2-4 and 12.

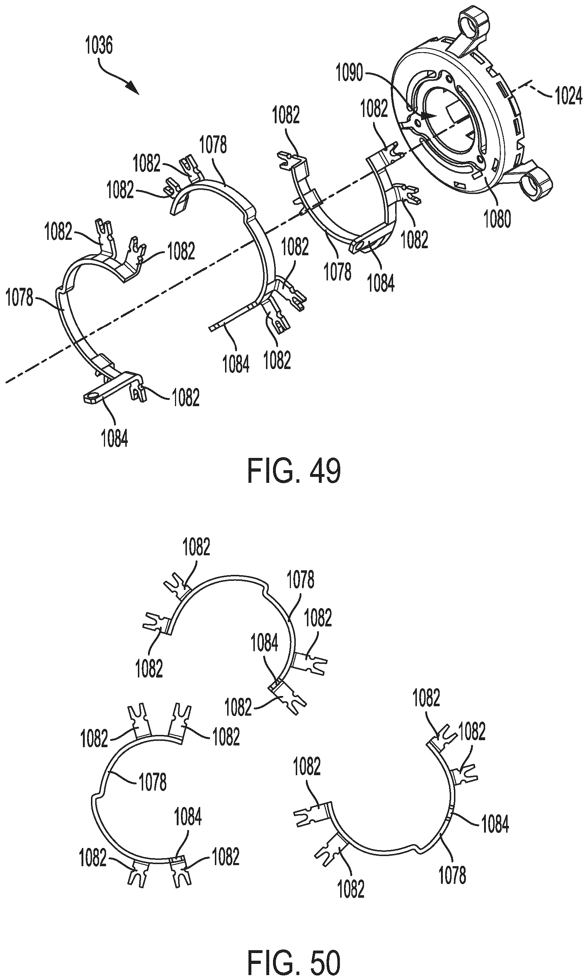

The motor 1014 includes a bus bar assembly 1036 that couples to an axial end of the stator assembly 820. The bus bar assembly 1036 includes three annular conductors 1078 (FIGS. 49-50) and an overmolded body 1080 that fixedly supports the conductors 1078. Each conductor 1078 includes four winding connection terminals or tangs 1082 provided at two opposite ends of the conductor 1078, and a power connection terminal 1084 protruding from the conductor 1078. The overmolded body 1080 includes three mounting arms 1094 protruding radially from a central region of the body 1080 and spaced at equal intervals about the circumference thereof. The mounting arms 1094 engage mounting portions 870 defined by the overmolded insulators 848 of the first stator segments 842a. The mounting arms 1094 can be secured to the mounting portions 870 via, e.g., threaded fasteners.

Each terminal 1084 electrically connects to a PCBA (e.g., via wires; not shown) that receives power from the battery pack 16 (FIG. 1) and selectively applies electrical current to the stator windings 850. The leads 886 of the windings 850 connect to the two adjacent tangs 1082 of the conductors 1078. In this way, the conductors 1078 electrically connect the stator windings 850 to the PCBA.

The overmolded body 1080 defines a central aperture or bearing pocket 1090 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 1036 is secured to each mounting portion 870 of each stator segment 842a, and further supports the rotor bearing 92, the bus bar assembly 1036 centers the rotor assembly 22 with respect to the stator assembly 820.

A PCBA 1039, such as a rotor position sensor circuit board, is coupled to the overmolded body 1080 of the bus bar assembly 1036. The PCBA 1039 is generally annular in shape and received into a corresponding centrally located, annularly shaped recess 1041 defined in the overmolded body 1080 and secured thereto by threaded fasteners. The PCBA 1039 covers at least a portion of the bearing pocket 1090.

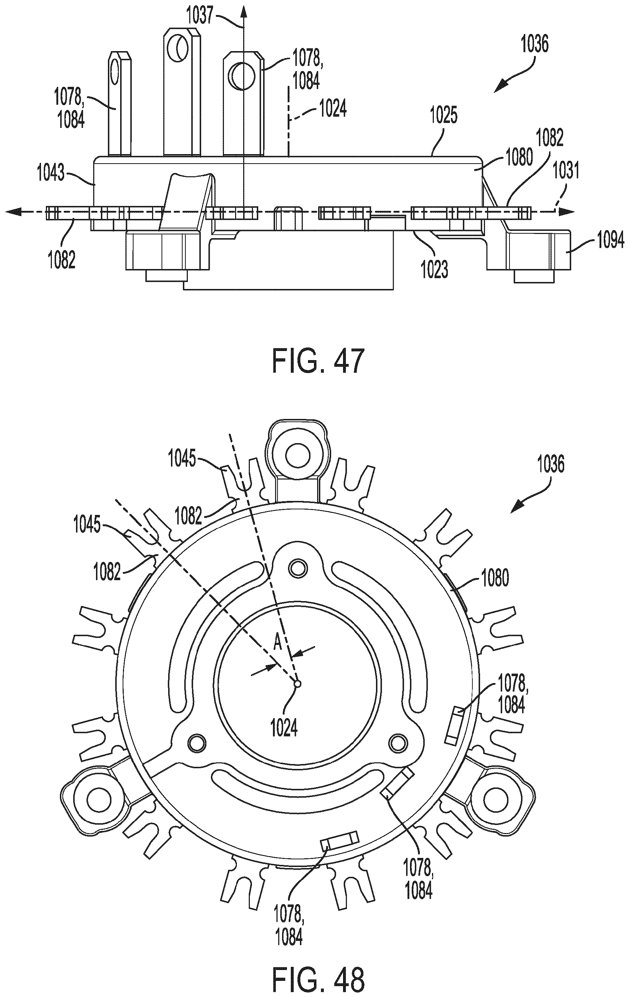

As shown in FIG. 47, the overmolded body 1080 includes a first axial surface 1023 extending at a first axial end thereof and a second axial surface 1025 extending at a second axial end thereof. The first axial surface 1023 faces toward the stator assembly 820 and the second axial surface 1025 faces away from the stator assembly 820. The overmolded body 1080 also includes a circumferential outer surface 1043 that extends between the first and second axial surfaces 1023, 1025. The tangs 1082 each protrude from the circumferential outer surface 1043 generally in the radial direction. Each tang 1082 includes a forked tip 1045 at its distal end and is generally planar in shape. The corresponding lead 886 (FIG. 45) of the adjacent stator winding 850 is received by and contacts the forked tip 1045 and is mechanically attached thereto by, e.g., laser welding. In other embodiments, the leads 886 can be attached to the forked tips 1045 by other means, such as soldering, ultrasonic welding, crimping, and the like. As further shown in FIG. 47, each of the tangs 1082 are also generally located within the same axial region of the motor 1014. In particular, each tang 1082 lies within and defines a first plane 1031 that extends perpendicular to the central axis 1024. As shown in FIG. 47, the tangs 1082 are spaced at generally equal intervals about the circumference of the overmolded body 1080. As such, an angle A is measured on center about the central axis 1024 between any two adjacent tangs 1082. In the illustrated embodiment, the bus bar assembly 1036 includes twelve tangs 1082 and the angle A is approximately 30 degrees.

In the illustrated embodiment, the bus bar assembly 1036 includes three power connection terminals 1084 that protrude from the second axial surface 1025 of the overmolded body 1080 in an axial direction 1037. Each terminal 1084 is formed as a straight leg oriented perpendicular to the central axis 1024. All of the terminals 1084 extend generally parallel to one another and perpendicular to the first plane 1031.

The bus bar assembly 1036 is configured to provide a parallel delta winding configuration for the motor 1014. Specifically, when the leads 886 of the windings 850 forming each coil are connected to the corresponding forked tips 1045 of the respective nearest tangs 1082, the windings 850 are arranged in a parallel delta winding configuration.

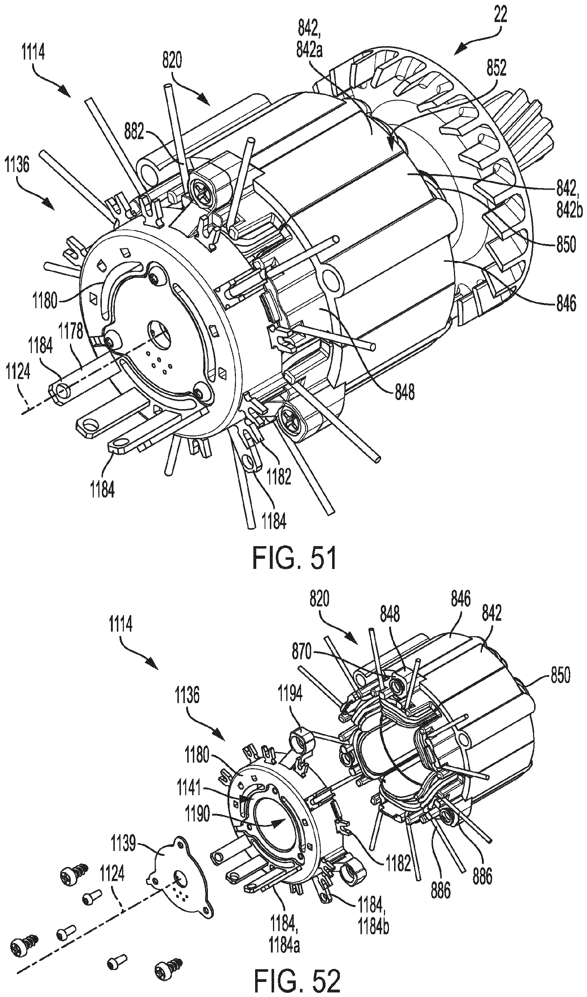

FIGS. 51-56 illustrate portions of an electric motor 1114 according to another embodiment of the disclosure. The motor 1114 includes the segmented stator assembly 820 described herein in connection with FIGS. 33-38, and is operable with the rotor assembly 22 described herein in connection with FIGS. 2-4 and 12.

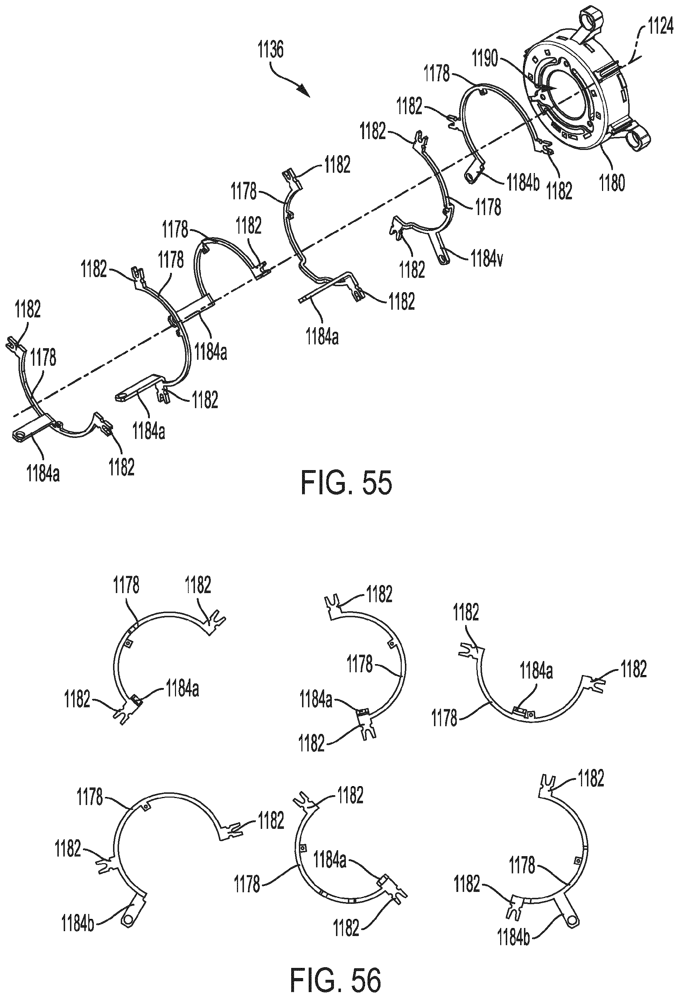

The motor 1114 includes a bus bar assembly 1136 that couples to an axial end of the stator assembly 820. The bus bar assembly 1136 includes six annular conductors 1178 (FIGS. 55 and 56) and an overmolded body 1180 that fixedly supports the conductors 1178. Each conductor 1178 includes two winding connection terminals or tangs 1182 provided at two opposite ends of the conductor 1178 and a power connection terminal 1184. The overmolded body 1180 includes three mounting arms 1194 protruding radially from a central region of the body 1180 and spaced at equal intervals about the circumference thereof. The mounting arms 1194 engage mounting portions 870 defined by the overmolded insulators 848 of the first stator segments 842a. The mounting arms 1194 can be secured to the mounting portions 870 via, e.g., threaded fasteners.

Each terminal 1184 electrically connects to a PCBA (e.g., via wires; not shown) that receives power from the battery pack 16 (FIG. 1) and selectively applies electrical current to the stator windings 850. The two leads 886 of each winding 850 forming each coil connect to the two adjacent tangs 1182 of the conductors 1178. In this way, the conductors 1178 electrically connect the stator windings 850 to the PCBA.

The overmolded body 1180 defines a central aperture or bearing pocket 1190 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 1136 is secured to each mounting portion 870 of each stator segment 842a, and further supports the rotor bearing 92, the bus bar assembly 1136 centers the rotor assembly 22 with respect to the stator assembly 820.

A PCBA 1139, such as a rotor position sensor circuit board, is coupled to the overmolded body 1180 of the bus bar assembly 1136. The PCBA 1139 is generally annular in shape and received into a corresponding centrally located, annularly shaped recess 1141 defined in the overmolded body 1180 and secured thereto by threaded fasteners. The PCBA 1139 covers at least a portion of the bearing pocket 1190.

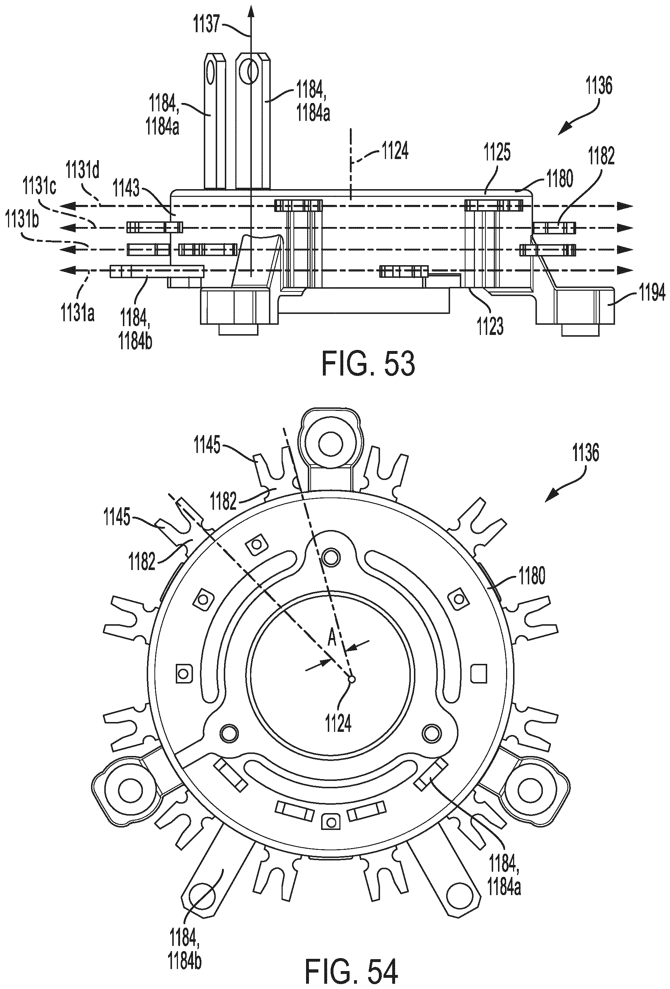

As shown in FIG. 53, the overmolded body 1180 includes a first axial surface 1123 extending at a first axial end thereof and a second axial surface 1125 extending at a second axial end thereof. The first axial surface 1123 faces toward the stator assembly 820 and the second axial surface 1125 faces away from the stator assembly 820. The overmolded body 1180 also includes a circumferential outer surface 1143 that extends between the first and second axial surfaces 1123, 1125. The tangs 1182 each protrude from the circumferential outer surface 1143 generally in the radial direction. Each tang 1182 includes a forked tip 1145 at its distal end and is generally planar in shape. The corresponding lead 886 (FIG. 51) of the adjacent stator winding 850 is received by and contacts the forked tip 1145 and is mechanically attached thereto by, e.g., laser welding. In other embodiments, the leads 886 can be attached to the forked tips 1145 by other means, such as soldering, ultrasonic welding, crimping, and the like. As further shown in FIG. 53, each of the tangs 1182 are also generally located within different axial regions of the motor 1114. In particular, some of the tangs 1182 lie within and defines a first plane 1131a, others of the tangs 1182 lie within and define a second plane 1131b, others of the tangs 1182 lie within and define a third plane 1131c, and yet others of the tangs 1182 lie within and define a fourth plane 1131d. Each of the first, second, third, and fourth planes 1131a-1131d extend parallel to one another and perpendicular to the central axis 1124 and are spaced apart from each other at intervals in the axial direction. As shown in FIG. 54, the tangs 1182 are spaced at generally equal intervals about the circumference of the overmolded body 1180. As such, an angle A is measured on center about the central axis 1124 between any two adjacent tangs 1182. In the illustrated embodiment, the bus bar assembly 1136 includes twelve tangs 1182 and the angle A is approximately 30 degrees.

In the illustrated embodiment, the bus bar assembly 1136 includes six terminals 1184 that are gathered to one lateral side of the overmolded body 1180. The terminals 1184 include four first terminals 1184a that protrude from the second axial surface 1125 of the overmolded body 1180 in an axial direction 1137. Each terminal 1184a is formed as a straight leg oriented perpendicular to the central axis 1124. All of the first terminals 1184a extend generally parallel to one another and perpendicular to the first plane 1131a. The terminals 1184 also include two second terminals 1184b that protrude radially outward from the circumferential surface 1143 of the overmolded body 1180 in a direction that is perpendicular to the central axis 1124. Both of the second terminals 1184b reside in the first plane 1131a that extends perpendicular to the central axis 1124.

The bus bar assembly 1136 is configured to provide a delta wye winding configuration for the motor 1014. Specifically, when the leads 886 of the windings 850 forming each coil are connected to the corresponding forked tips 1145 of the respective nearest tangs 1182, the windings 850 are arranged in a delta wye winding configuration.

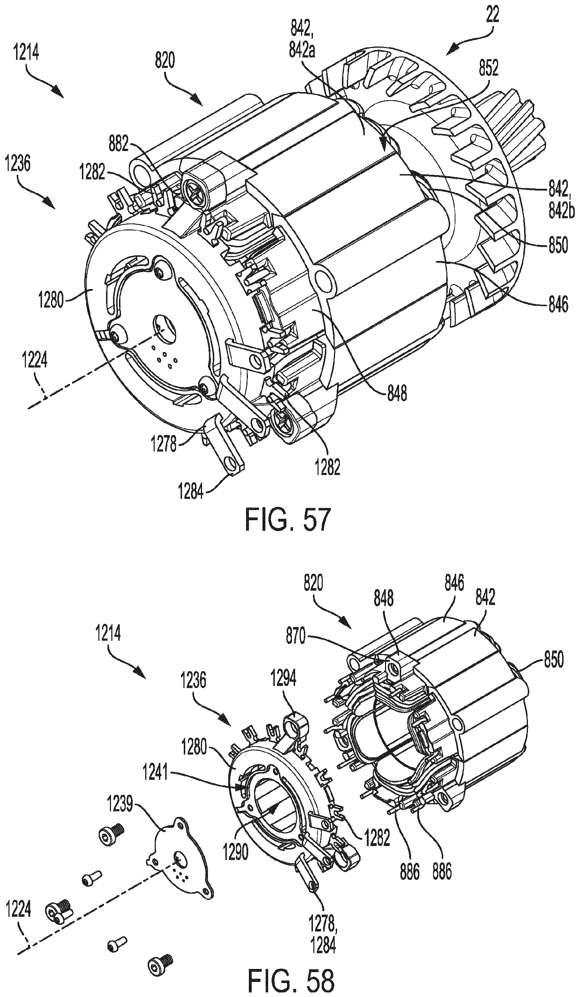

FIGS. 57-62 illustrate all or portions of an electric motor 1214 according to another embodiment of the disclosure. The motor 1214 includes the segmented stator assembly 820 described herein in connection with FIGS. 33-38, and is operable with the rotor assembly 22 described herein in connection with FIGS. 2-4 and 12.

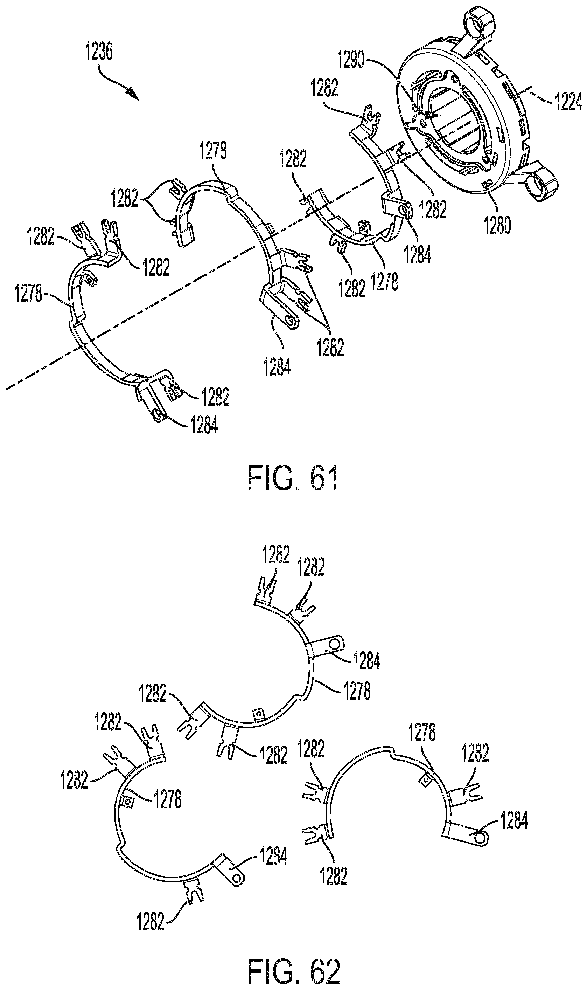

The motor 1214 includes a bus bar assembly 1236 that couples to an axial end of the stator assembly 820. The bus bar assembly 1236 includes three annular conductors 1278 (FIGS. 61-62) and an overmolded body 1280 that fixedly supports the conductors 1278. Each conductor 1278 includes four winding connection terminals or tangs 1282 provided at two opposite ends of the conductor 1278, and a power connection terminal 1284 protruding from the conductor 1278. The overmolded body 1280 includes three mounting arms 1294 protruding radially from a central region of the body 1280 and spaced at equal intervals about the circumference thereof. The mounting arms 1294 engage mounting portions 870 defined by the overmolded insulators 848 of the first stator segments 842a. The mounting arms 1294 can be secured to the mounting portions 870 via, e.g., threaded fasteners.

Each terminal 1284 electrically connects to a PCBA (e.g., via wires; not shown) that receives power from the battery pack 16 (FIG. 1) and selectively applies electrical current to the stator windings 850. The leads 886 of the windings 850 connect to the two adjacent tangs 1282 of the conductors 1278. In this way, the conductors 1278 electrically connect the stator windings 850 to the PCBA.

The overmolded body 1280 defines a central aperture or bearing pocket 1290 that receives the rotor bearing 92 (FIG. 3). The rotor bearing 92 receives the rotor shaft 30 of the rotor assembly 22 (FIG. 3) to rotatably support the rotor assembly 22. Since the bus bar assembly 1236 is secured to each mounting portion 870 of each stator segment 842a, and further supports the rotor bearing 92, the bus bar assembly 1236 centers the rotor assembly 22 with respect to the stator assembly 820.

A PCBA 1239, such as a rotor position sensor circuit board, is coupled to the overmolded body 1280 of the bus bar assembly 1236. The PCBA 1239 is generally annular in shape and received into a corresponding centrally located, annularly shaped recess 1241 defined in the overmolded body 1280 and secured thereto by threaded fasteners. The PCBA 1239 covers at least a portion of the bearing pocket 1290.

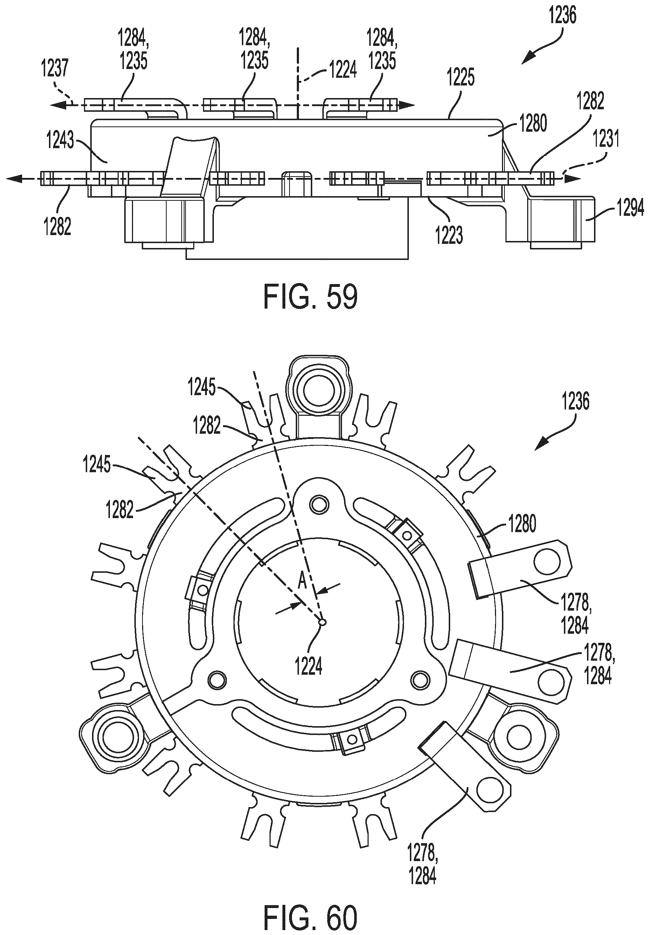

As shown in FIG. 59, the overmolded body 1280 includes a first axial surface 1223 extending at a first axial end thereof and a second axial surface 1225 extending at a second axial end thereof. The first axial surface 1223 faces toward the stator assembly 820 and the second axial surface 1225 faces away from the stator assembly 820. The overmolded body 1280 also includes a circumferential outer surface 1243 that extends between the first and second axial surfaces 1223, 1225. The tangs 1282 each protrude from the circumferential outer surface 1243 generally in the radial direction. Each tang 1282 includes a forked tip 1245 at its distal end and is generally planar in shape. The corresponding lead 886 (FIG. 45) of the adjacent stator winding 850 is received by and contacts the forked tip 1245 and is mechanically attached thereto by, e.g., laser welding. In other embodiments, the leads 886 can be attached to the forked tips 1245 by other means, such as soldering, ultrasonic welding, crimping, and the like. As further shown in FIG. 47, each of the tangs 1282 are also generally located within the same axial region of the motor 1214. In particular, each tang 1282 lies within and defines a first plane 1231 that extends perpendicular to the central axis 1224. As shown in FIG. 60, the tangs 1282 are spaced at generally equal intervals about the circumference of the overmolded body 1280. As such, an angle A is measured on center about the central axis 1224 between any two adjacent tangs 1282. In the illustrated embodiment, the bus bar assembly 1236 includes twelve tangs 1282 and the angle A is approximately 30 degrees.

In the illustrated embodiment, the bus bar assembly 1236 includes three power connection terminals 1284. Each terminal 1284 protrudes from the second axial surface 1225 of the overmolded body 1280 and includes a leg portion 1235 that extends radially outward perpendicular to the central axis 1224. The longitudinal extents of each leg portion 935 together define a second plane 1237 that extends perpendicular to the central axis 1224 and parallel to the first plane 1231.

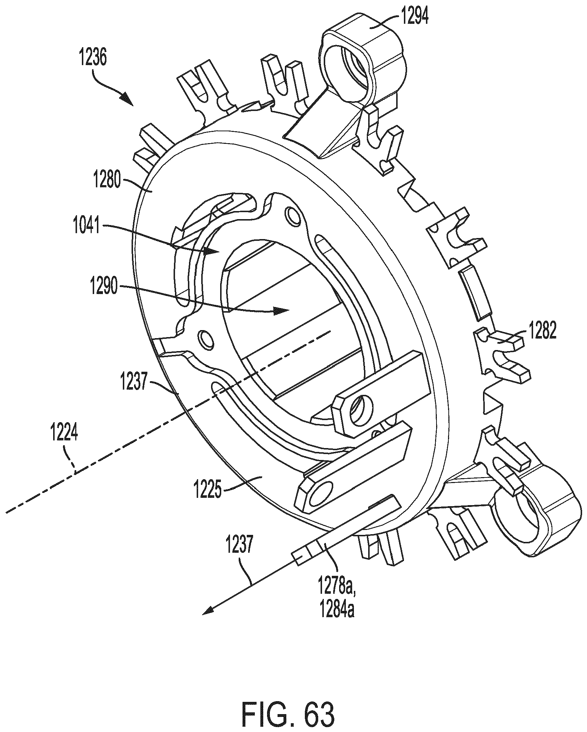

FIG. 63 illustrates the bus bar assembly 1236 according to another embodiment. The bus bar assembly 1236 of FIG. 63 is substantially similar to the bus bar assembly 1236 of FIGS. 57-62, but differs with respect to the power connection terminals. In particular, the bus bar assembly 1236 of FIG. 63 includes three modified conductors 1278a having three power connection terminals 1284a that protrude from the second axial surface 1225 of the overmolded body 1280 in an axial direction 1238. Each terminal 1284a is formed as a straight leg oriented perpendicular to the central axis 1224. All of the terminals 1284 extend generally parallel to one another.

The bus bar assembly 1236 is configured to provide a series delta winding configuration for the motor 1214. Specifically, when the leads 886 of the windings 850 forming each coil are connected to the corresponding forked tips 1245 of the respective nearest tangs 1282, the windings 850 are arranged in a series delta winding configuration.

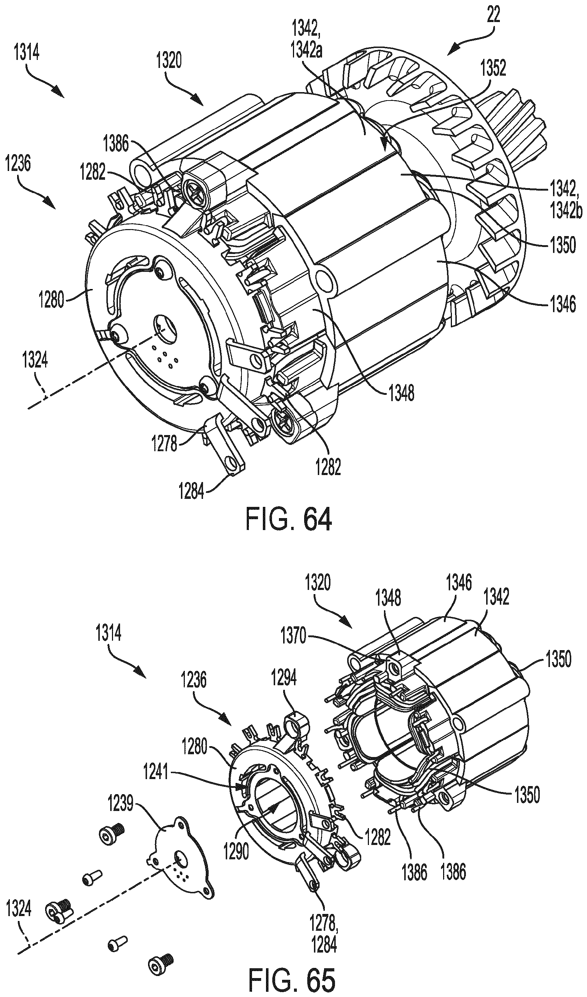

FIGS. 64-70 illustrate all or portions of an electric motor 1314 according to another embodiment of the disclosure. The motor 1314 includes a segmented stator assembly 1320 that is substantially similar to the segmented stator assembly 820 described herein in connection with FIGS. 33-38. The motor 1314 further includes or is operable with the rotor assembly 22 described herein in connection with FIGS. 2-4 and 12. Features and elements of the stator assembly 1320 that are similar to the features and elements of the stator assembly 820 are assigned the same reference numerals "plus 500." The following disclosure will focus on the differences between the stator assembly 1320 and the stator assembly 820. In particular, the following disclosure will focus on an arrangement of first and second wire notches 1302a, 1302b formed in an overmolded insulator 1348 of each of a plurality of stator segments 1342 of the stator assembly 1320. It should be understood that the features of the stator assembly 1320 that are not explicitly described below have the same properties as the features of the stator assembly 820. Moreover, while the arrangement of the first and second wire notches 1302a, 1302b is described in connection with the stator assembly 1320, the notch arrangement can also be incorporated into any of the embodiments of the stator assemblies described herein (e.g., stator assemblies 20, 120, 420, 520, 620, 720, and 820) to achieve the same or similar benefits as will be described below.

The motor 1314 further includes the bus bar assembly 1236 described herein in connection with FIGS. 57-62. The bus bar assembly 1236 couples to the stator assembly 1320 in a manner similar to that described herein with respect to the stator assembly 820. Alternatively, in other arrangements of the electric motor 1314 (not shown), the stator assembly 1320 can instead couple to and operate with any one of the other bus bar assemblies described herein (e.g., bus bar assemblies 36, 536, 736, 836, 936, 1036, and 1136).

the stator assembly 1320 is a segmented stator assembly including, in the illustrated embodiment, six stator segments 1342 that are laser welded to one another at each notch and protrusion interlock 1352 to secure the stator segments 1342 together. In alternative embodiments (not shown), rather than being laser welded to one another, the stator segments 1342 may alternatively be arranged within a tubular housing such as the tubular housing 44 of the stator assembly 20 (FIG. 3) discussed above. In the illustrated embodiment, each stator segment 1342 includes a core 1346, an overmolded insulator 1348, and a coil or stator winding 1350. The stator segments 1342 are not uniform, but instead include first stator segments 1342a and second stator segments 1342b arranged in an alternating order in a circumferential direction. Each first stator segment 1342a is connected to a second stator segment 1342b at each circumferential end (i.e., at the notch and protrusion interlocks 1352).

The overmolded insulators 1348 of the first stator segments 1342a define mounting portions 1370 that engage the mounting arms 1294 formed on the overmolded body 1280 of the bus bar assembly 1236 to secure the bus bar assembly 1236 to the stator assembly 1320. The mounting arms 1294 can be secured to the mounting portions 1370 via, e.g., threaded fasteners.

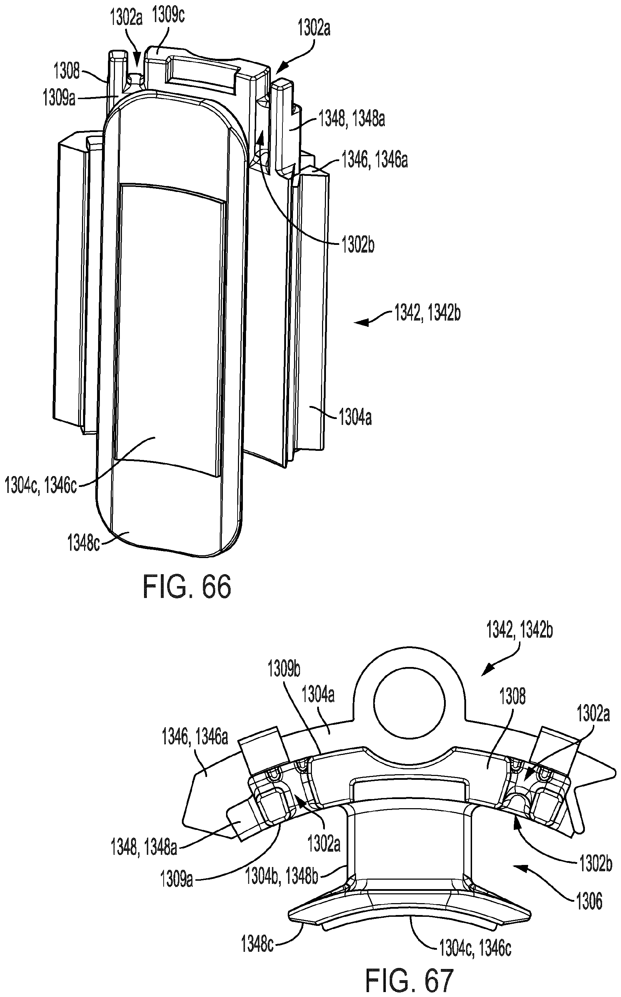

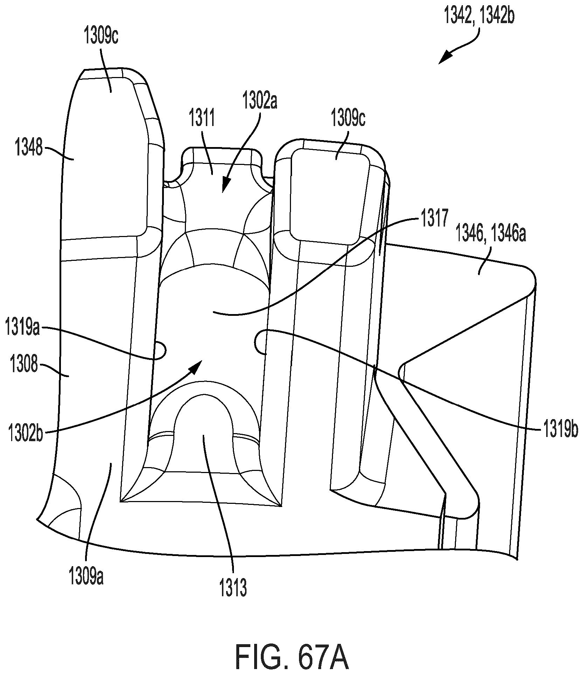

FIGS. 66 and 67 illustrate one of the second stator segments 1342b of the stator assembly 1320. Each second stator segment 1342b includes an annular stator segment yoke portion 1304a, a stator segment tooth portion 1304b protruding radially from a central region of the stator segment yoke portion 1304a, and a stator segment crown portion 1304c at an end of the stator segment tooth portion 1304b opposite from the stator segment yoke portion 1304a. In the illustrated embodiment, the stator segment tooth portion 1304b protrudes radially inward from the stator segment yoke portion 1304a in a direction toward a central axis 1324 (FIG. 64) of the assembled electric motor 1314. Winding slots 1306 are defined between the stator segment yoke portion 1304a and the stator segment crown portion 1304c and on each lateral side and each axial end of the stator segment tooth portion 1304b. The winding slots 1306 accommodate the coiled stator winding 1350. The stator segment yoke portion 1304a, the stator segment tooth portion 1304b, and the stator segment crown portion 1304c are each formed from respective portions of the core 1346 and the overmolded insulator 1348. Specifically, the stator segment yoke portion 1304a is formed from an insulator yoke portion 1348a of the overmolded insulator 1348 and from a core yoke portion 1346a of the core 1346. The stator segment tooth portion 1304b is formed from an insulator tooth portion 1348b of the overmolded insulator 1348 and from a core tooth portion 1346b of the core 1346. The stator segment crown portion 1304c is formed from an insulator crown portion 1348c of the overmolded insulator 1348 and from a core crown portion 1346c of the core 1346.

The insulator yoke portion 1348a of the overmolded insulator 1348 forms a standoff portion 1308 which protrudes axially away from the core yoke portion 1346a at one axial end of the second stator segment 1342b. The standoff portion 1308 may contact or interface with the bus bar assembly 1236. Specifically, the standoff portion 1308 may contact the first axial surface 1223 (FIG. 59) of the overmolded body 1280 of the bus bar assembly 1236. With reference to FIGS. 66 and 67, the standoff portion 1308 includes a curved inner surface 1309a facing toward the insulator tooth portion 1348b and the insulator crown portion 1348c, a curved outer surface 1309b facing away from the insulator tooth portion 1348b, and a generally flat top surface 1309c facing away from the core yoke portion 1346a in the axial direction.

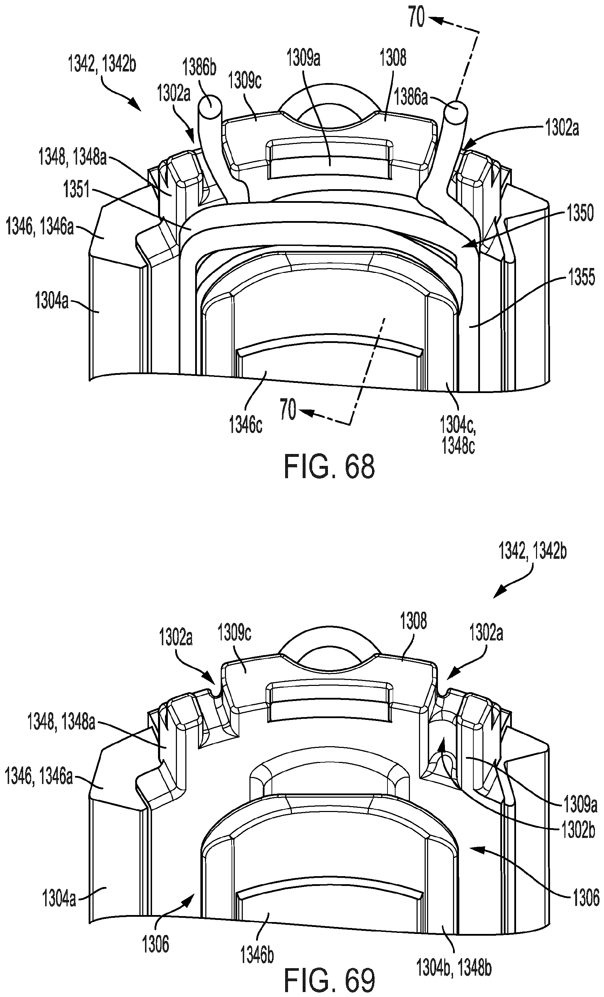

The coiled stator winding 1350 (FIGS. 65 and 68) is formed by wrapping an elongated wire 1351 about the stator segment tooth portion 1304b within the winding slot 1306 to form a coil 1355. The elongated wire 1351 includes two respective end portions or leads 1386 extending away from the coil 1355 and connecting to the two respective adjacent tangs 1282 of the bus bar assembly 1236. In this way, the conductors 1278 of the bus bar assembly 1236 electrically connect the stator windings 1350 to the PCBA 1239.

The standoff portion 1308 defines a pair of first wire notches 1302a in the flat top surface 1309c. Each first wire notch 1302a is formed proximate or adjacent a corresponding winding slot 1306 and extends generally in a radial direction from the curved inner surface 1309a to the curved outer surface 1309b. The first wire notches 1302a each have a depth dimension measured in the axial direction of the second stator segment 1342b, beginning from the flat top surface 1309c and ending at a first notch bottom wall 1311. Each first wire notch 1302a opens axially in a direction away from the core yoke portion 1346a, and opens radially in directions both inward and outward with respect to the stator assembly 1320. The leads 1386 of the stator winding 1350 exit from the winding slots 1306 by passing through the first wire notches 1302a. The first wire notches 1302a accommodate the leads 1386 and enable the leads to pass between the bus bar assembly 1236 and the standoff portion 1308. That is, because the top surface 1309c of the standoff portion 1308 can be in direct contact with the overmolded body 1280 (FIG. 65) of the bus bar assembly 1236, the first wire notches 1302a provide a space for the leads 1386 to pass between the standoff portion 1308 and the overmolded body 1280.

With reference to FIGS. 66, 67, 69, and 70, the standoff portion 1308 defines a relief notch or second wire notch 1302b recessed in the curved inner surface 1309a. The second wire notch 1302b is formed proximate to or co-extensive with one of the first wire notches 1302a and communicates with the adjacent first wire notch 1302a. The second wire notch 1302b extends in the axial direction of the second stator segment 1342b from the top surface 1309c until it terminates at a second notch bottom wall 1313 located near an axial end face of the core yoke portion 1346a. The second wire notch 1302b is further defined by a second notch base wall 1317 which faces in the radial direction of the stator assembly 1320 and which extends in the axial direction from the second notch bottom wall 1313 to the first notch bottom wall 1311. The second wire notch 1302b is also defined by a second notch first sidewall 1319a and a second notch second sidewall 1319b which are in facing relationship with one another and face generally in the circumferential direction of the assembled stator assembly 1320. The second notch first and second sidewalls 1319a, 1319b extend, respectively, from the second notch base wall 1317 to the curved inner surface 1309a, and from the second notch bottom wall 1313 to the top surface 1309c. The second wire notch 1302b opens radially inward, i.e., toward the stator segment crown portion 1304c, and opens axially in the direction away from the core yoke portion 1346a.

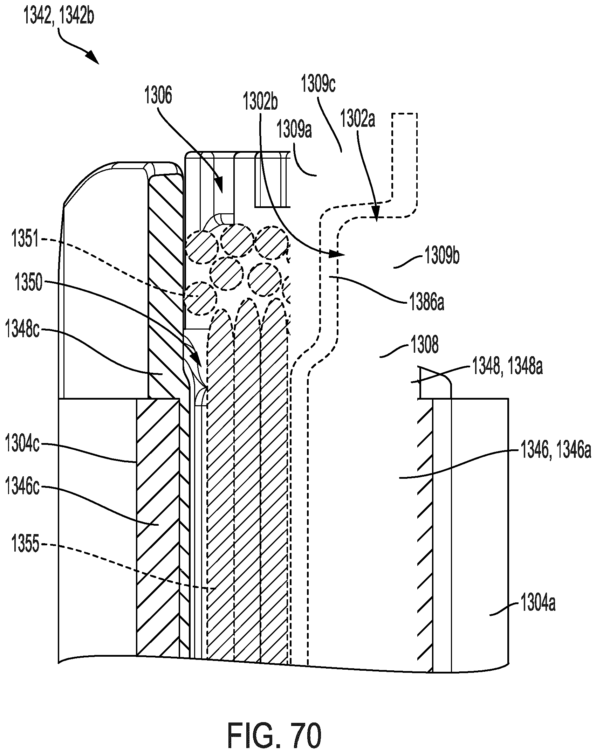

The second wire notch 1302b provides a relief space to accommodate one of the leads 1386 of the stator winding 1350. As shown in FIGS. 68 and 70, the wire 1351 that forms the stator winding 1350 makes multiple passes around the stator segment tooth portion 1304b to form the coil 1355, which fills the winding slots 1306. One of the leads 1386 may be considered a starting lead 1386a from which the wire 1351 first enters the winding slots 1306 and forms a first pass about the stator segment tooth portion 1304b. As additional passes are subsequently formed by the winding wire 1351, they overlap the first pass and each other and generally cover a portion of the starting lead 1386a. Accordingly, as shown in FIG. 70, the starting lead 1386a can become captured or surrounded between the curved inner surface 1309a and several passes of the winding wire 1351. The second wire notch 1302b receives the starting lead 1386a so that the starting lead 1386a becomes recessed within the curved inner surface 1309a. Thus, the second wire notch 1302b provides a relief space by which the starting lead 1386a passes by the adjacent passes of the winding wire 1351. The starting lead 1386a subsequently passes from the second wire notch 1302b to the first wire notch 1302, by which the starting lead 1386a exits the winding slot 1306 and attaches to the adjacent tang 1282 of the bus bar assembly 1236. The second wire notch 1302b also enables the wire size of the winding wire to be increased as compared to stator assemblies that do not include a second wire notch. For example, the second wire notch 1302b enables a diameter of the wire 1351 to be increased in size up to, e.g., 1.7 millimeters (mm) in diameter.

While the second wire notch 1302b is shown only on the right side of the standoff portion 1308 in FIGS. 67 and 69, the second stator segment 1342b can alternatively include the second wire notch 1302b on the left side in communication with the left side first wire notch 1302a. In additional embodiments, the second stator segment 1342b can include two second wire notches 1302b that each communicate with the respective first wire notch 1302a. Moreover, while the first and second wire notches 1302a, 1302b are described herein for the second stator segment 1342b, the same arrangements of the first and second wire notches 1302a, 1302b can be formed in standoff portions of the first stator segments 1342a as well.

Although the disclosure has been described in detail with reference to certain preferred embodiments, variations and modifications exist within the scope and spirit of one or more independent aspects of the disclosure as described.

Various features of the invention are set forth in the following claims.

## Claims

1. An electric motor comprising:
a rotor assembly including a rotor shaft;
a stator assembly including a plurality of stator segments arranged adjacent one another in a circumferential direction of the stator assembly, at least one stator segment including
a core having a core yoke portion and a core tooth portion,
an insulator at least partially covering the core and having an insulator yoke portion and an insulator tooth portion,
a stator segment yoke portion formed by the core yoke portion and the insulator yoke portion,
a stator segment tooth portion formed by the core tooth portion and the insulator tooth portion, and
a stator winding extending about the stator segment tooth portion including a wire lead; and
a bus bar assembly coupled to the stator assembly and configured to electrically connect to the stator winding, the bus bar assembly including a molded body and a plurality of conductors;
wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion;
wherein the standoff portion defines a wire notch recessed in the inner surface and extending in an axial direction of the electric motor; and
wherein the wire notch at least partially receives the wire lead.

2. The electric motor of claim 1, wherein the wire notch is a second wire notch, and wherein the standoff portion further defines a first wire notch recessed in the top surface and
extending in a radial direction of the electric motor from the inner surface to the outer surface.

3. The electric motor of claim 2, wherein the first wire notch at least partially receives the wire lead.

4. The electric motor of claim 2, wherein the wire lead passes between the standoff portion and the molded body of the bus bar assembly via the first wire notch.

5. The electric motor of claim 2, wherein the first wire notch communicates with the second wire notch.

6. The electric motor of claim 1, wherein the plurality of stator segments comprises a first stator segment and a second stator segment adjacent the first stator segment in a circumferential direction.

7. The electric motor of claim 1, wherein the wire notch extends in the axial direction from the top surface of the standoff portion to a notch bottom wall located near an axial end face of the core yoke portion.

8. The electric motor of claim 7, wherein:
the core further includes a core crown portion at a distal end of the core tooth portion;
the insulator further includes an insulator crown portion at a distal end of the insulator tooth portion;
the at least one stator segment further includes a stator segment crown portion formed by the core crown portion and the insulator crown portion; and
the wire notch opens radially toward the stator segment crown portion.

9. The electric motor of claim 8, wherein the wire notch also opens axially away from the core yoke portion.

10. An electric motor comprising:
a rotor assembly including a rotor shaft; and
a stator assembly including a plurality of stator segments arranged adjacent one another in a circumferential direction of the stator assembly, at least one stator segment including
a core having a core yoke portion and a core tooth portion,
an insulator at least partially covering the core and having an insulator yoke portion and an insulator tooth portion,
a stator segment yoke portion formed by the core yoke portion and the insulator yoke portion,
a stator segment tooth portion formed by the core tooth portion and the insulator tooth portion, and
a stator winding extending about the stator segment tooth portion and including a wire lead;
wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion;
wherein the standoff portion defines a first wire notch recessed in the top surface and extending in a radial direction of the electric motor from the inner surface to the outer surface;
wherein the standoff portion further defines a second wire notch recessed in the inner surface and extending in an axial direction of the electric motor, the first wire notch communicating with the second wire notch; and
wherein the first wire notch and the second wire notch each at least partially receive the wire lead.

11. The electric motor of claim 10, wherein the second wire notch extends in the axial direction from the top surface of the standoff portion to a second notch bottom wall located near an axial end face of the core yoke portion.

12. The electric motor of claim 11, wherein:
the core further includes a core crown portion at a distal end of the core tooth portion;
the insulator further includes an insulator crown portion at a distal end of the insulator tooth portion;
the at least one stator segment further includes a stator segment crown portion formed by the core crown portion and the insulator crown portion; and
the second wire notch opens radially toward the stator segment crown portion.

13. The electric motor of claim 12, wherein the second wire notch also opens axially away from the core yoke portion.

14. The electric motor of claim 12, wherein the second wire notch is further defined by:
a second notch base wall defined by the standoff portion and facing radially toward the stator segment crown portion; and
a second notch first sidewall and a second notch second sidewall each defined by the standoff portion and facing toward one another in a circumferential direction.

15. The electric motor of claim 14, wherein the first wire notch is defined by a first notch bottom wall recessed from the top surface of the standoff portion in the axial direction and facing away from the core yoke portion.

16. The electric motor of claim 15, wherein the second notch base wall extends in the axial direction from the second notch bottom wall to the first notch bottom wall.

17. The electric motor of claim 10, wherein the first wire notch opens away from the core yoke portion in the axial direction, opens inward in the radial direction, and opens outward in the radial direction.

18. A power tool comprising:
a housing; and
an electric motor received into the housing, the electric motor including
a rotor assembly including a rotor shaft,
a stator assembly including a plurality of stator segments arranged adjacent one another in a circumferential direction of the stator assembly, at least one stator segment including
a core having a core yoke portion and a core tooth portion,
an insulator at least partially covering the core and having an insulator yoke portion and an insulator tooth portion,
a stator segment yoke portion formed by the core yoke portion and the insulator yoke portion,
a stator segment tooth portion formed by the core tooth portion and the insulator tooth portion, and
a stator winding extending about the stator segment tooth portion including a wire lead;
wherein the electric motor further includes a bus bar assembly coupled to the stator assembly and configured to electrically connect to each stator winding, the bus bar assembly including a molded body and a plurality of conductors;
wherein the insulator yoke portion of the at least one stator segment includes a standoff portion that protrudes axially away from the core yoke portion of the at least one stator segment, the standoff portion defining an inner surface facing toward the insulator tooth portion, an outer surface facing away from the insulator tooth portion, and a top surface facing away from the core yoke portion;
wherein the standoff portion defines a wire notch recessed in the inner surface and extending in an axial direction of the electric motor; and
wherein the wire notch at least partially receives the wire lead.

19. The power tool of claim 18, wherein the wire notch extends in the axial direction from the top surface of the standoff portion to a notch bottom wall located near an axial end face of the core yoke portion, and wherein the wire notch opens in a radial direction of the electric motor and opens in the axial direction.

20. The power tool of claim 19, wherein the stator winding comprises a wire having a diameter of 1.7 millimeters.

21. An electric motor comprising:
a rotor assembly including a rotor shaft;
a stator assembly including
a core having a core yoke portion, a core tooth portion extending from the core yoke portion, and a core crown portion attached to the core tooth portion and located opposite from the core yoke portion,
an insulator at least partially covering the core, the insulator having an insulator yoke portion at least partially covering the core yoke portion, an insulator tooth portion at least partially covering the core tooth portion, and an insulator crown portion at least partially covering the core crown portion, and
a stator winding extending about the insulator tooth portion, the stator winding including a wire lead; and
a bus bar assembly coupled to the stator assembly and configured to electrically connect to the stator winding, the bus bar assembly including a molded body and a plurality of conductors;
wherein the insulator yoke portion includes a standoff portion that protrudes axially away from the core yoke portion, the standoff portion defining an inner surface facing toward the insulator crown portion, an outer surface facing away from the insulator crown portion, and a top surface facing away from the core yoke portion;
wherein the standoff portion defines a wire notch recessed in the inner surface and extending in an axial direction of the electric motor; and
wherein the wire notch at least partially receives the wire lead.

22. The electric motor of claim 21, wherein the wire notch opens radially toward the insulator crown portion.

23. The electric motor of claim 22, wherein the wire notch also opens axially away from the core yoke portion.

24. The electric motor of claim 23, wherein the wire notch is a second wire notch, and wherein the standoff portion further defines a first wire notch recessed in the top surface and extending in a radial direction of the electric motor from the inner surface to the outer surface.

25. The electric motor of claim 24, wherein the first wire notch at least partially receives the wire lead.

26. The electric motor of claim 24, wherein the wire lead passes between the standoff portion and the molded body of the bus bar assembly via the first wire notch.

27. The electric motor of claim 24, wherein the first wire notch communicates with the second wire notch.

28. The electric motor of claim 24, wherein the second wire notch extends in the axial direction from the top surface of the standoff portion to a second notch bottom wall located near an axial end face of the core yoke portion.

29. The electric motor of claim 28, wherein the second wire notch is further defined by:
a second notch base wall defined by the standoff portion and facing radially toward the insulator crown portion; and
a second notch first sidewall and a second notch second sidewall each defined by the standoff portion and facing toward one another in a circumferential direction.

30. The electric motor of claim 29, wherein the first wire notch is defined by a first notch bottom wall recessed from the top surface of the standoff portion in the axial direction and facing away from the core yoke portion.

31. The electric motor of claim 30, wherein the second notch base wall extends in the axial direction from the second notch bottom wall to the first notch bottom wall.

32. The electric motor of claim 21, wherein the wire notch extends in the axial direction from the top surface of the standoff portion to a notch bottom wall located near an axial end face of the core yoke portion, and wherein the wire notch opens in a radial direction of the electric motor and opens in the axial direction.

33. An electric motor comprising:
a rotor assembly including a rotor shaft; and
a stator assembly including
a core having a core yoke portion, a core tooth portion extending from the core yoke portion, and a core crown portion attached to the core tooth portion and located opposite from the core yoke portion,
an insulator at least partially covering the core, the insulator having an insulator yoke portion at least partially covering the core yoke portion, an insulator tooth portion at least partially covering the core tooth portion, and an insulator crown portion at least partially covering the core crown portion, and
a stator winding extending about the insulator tooth portion, the stator winding including a wire lead;
wherein the insulator yoke portion includes a standoff portion that protrudes axially away from the core yoke portion, the standoff portion defining an inner surface facing toward the insulator crown portion, an outer surface facing away from the insulator crown portion, and a top surface facing away from the core yoke portion;
wherein the standoff portion defines a first wire notch recessed in the top surface and extending in a radial direction of the electric motor from the inner surface to the outer surface;
wherein the standoff portion further defines a second wire notch recessed in the inner surface and extending in an axial direction of the electric motor; and
wherein the first wire notch and the second wire notch each at least partially receive the wire lead.

34. The electric motor of claim 33, wherein the second wire notch extends in the axial direction from the top surface of the standoff portion to a second notch bottom wall located near an axial end face of the core yoke portion.

35. The electric motor of claim 34, wherein the second wire notch opens radially toward the insulator crown portion.

36. The electric motor of claim 35, wherein the second wire notch also opens axially away from the core yoke portion.

37. The electric motor of claim 36, wherein the second wire notch is further defined by a second notch base wall defined by the standoff portion and facing radially toward the insulator crown portion.

38. The electric motor of claim 37, wherein the first wire notch is defined by a first notch bottom wall recessed from the top surface of the standoff portion in the axial direction and facing away from the core yoke portion.

39. The electric motor of claim 38, wherein the second notch base wall extends in the axial direction from the second notch bottom wall to the first notch bottom wall.

40. The electric motor of claim 33, wherein the first wire notch opens away from the core yoke portion in the axial direction, opens inward in the radial direction, and opens outward in the radial direction.
